# EUROPEAN PATENT APPLICATION

(11) **EP 4 598 070 A1**
(43) Date of publication of application: **06.08.2025**
(21) Application number: 24875709.8
(22) Date of filing: 02.10.2024
(51) Int. Cl.: H04W 4/80, H04W 4/06, H04W 76/14, H04M 1/72412, G06F 3/16, H04R 3/12, H04L 67/1095

(54) **ELECTRONIC DEVICE FOR PROVIDING AUDIO SERVICE, AND OPERATING METHOD THEREOF**

(30) Priority: 30.10.2023 KR 20230147008; 25.01.2024 KR 20240011470
(71) Applicant: Samsung Electronics Co., Ltd, Suwon-si, Gyeonggi-do 16677 (KR)
(72) Inventor: AHN, Byeonghoon, Suwon-si Gyeonggi-do 16677 (KR); JIN, Juyeon, Suwon-si, Gyeonggi-do 16677 (KR); KIM, Sanghyeok, Suwon-si, Gyeonggi-do 16677 (KR); KIM, Taekyung, Suwon-si, Gyeonggi-do 16677 (KR); JANG, Seunguk, Suwon-si, Gyeonggi-do 16677 (KR); JANG, Junho, Suwon-si, Gyeonggi-do 16677 (KR)
(74) Representative: HGF
(86) International application number: PCT/KR2024/015001
(87) International publication number: WO 2025/095370

(57) **Abstract**

According to an embodiment, an electronic device (102; 104; 200) may comprise at least one sensor (410), at least one communication circuit (402), one or more processors (404) including processing circuitry; and memory (406) storing instructions that, when executed by the one or more processors individually or collectively, cause the electronic device to, establish a connection with a first external electronic device (101) via the at least one communication circuit, after establishing the connection, detect a user input via the at least one sensor, based on the user input, identify whether a broadcast operation is being performed, based on identifying that the broadcast operation is being performed, perform an operation corresponding to the user input for at least one broadcast isochronous stream (BIS) transmitted from a second external electronic device (210), and transmit information related to a result of the operation corresponding to the user input to the first external electronic device via the at least one communication circuit. Another embodiment may be possible.

## Description

### [Technical Field]

The disclosure relates to an electronic device providing an audio service and an operating method thereof.

### [Background Art]

Recently, with the development of information communication technology, various wireless communication technologies and various services have been developed. In particular, a Bluetooth scheme which is one of short-range communication schemes has been actively used, and electronic devices using the Bluetooth scheme have been also widely used.

The Bluetooth scheme may include a Bluetooth legacy (or Bluetooth classic) scheme and/or a Bluetooth low energy (BLE) scheme. An electronic device (e.g., a smart phone) that provides an audio service based on the BLE scheme may independently establish a communication link (e.g., a connected isochronous stream (CIS)) with external electronic devices, and transmit and receive data to and from each of the external electronic devices via the established communication link.

The audio service based on the BLE scheme may be provided via a connection-based CIS or a non-connection-based broadcast isochronous stream (BIS). If a multi-party audio service is provided via the CIS, all electronic devices participating in the multi-party audio service establish BLE links to each other, and establish CISs based on the established BLE links. If the number of electronic devices participating in a CIS-based multi-party audio service increases, the number of links which need to be established between the electronic devices participating in the CIS-based multi-party audio service may increase exponentially, and this exponential increase in the number of links may make it difficult to provide the CIS-based multi-party audio service and may also make it impossible for the CIS-based multi-party audio service to be provided.

Alternatively, if the multi-party audio service is provided via a BIS connection, there is no limitation on the number of electronic devices participating in the multi-party audio service, so the audio service may be provided normally even if the number of electronic devices participating in the multi-party audio service increases exponentially.

In a Bluetooth scheme, if a unicast scheme is used, a connection is established between a unicast media server device and a unicast media receiver device, so a playback control operation, such as a play operation, a pause operation, a previous track operation, and/or a next track operation, may be performed based on a user input through a media control profile (MCP) client device. In the unicast scheme, a playback control operation may be performed by processing the user input based on an MCP protocol.

However, in the Bluetooth scheme, if a broadcast scheme is used, a connection may not be established between the broadcast sink device and the broadcast source device. Since the connection is not established between the broadcast sink device and the broadcast source device, it may be impossible to perform the playback control operation of the broadcast sink device based on the user input via the broadcast sink device.

### [Detailed Description of the Invention]

### [Technical Solution]

An embodiment of the disclosure may provide an electronic device for providing an audio service and an operating method thereof.

An embodiment of the disclosure may provide an electronic device for performing a control operation for an audio service based on a user input through a broadcast sink device and an operating method thereof.

According to an embodiment of the disclosure, an electronic device (102; 104; 200) may comprise at least one sensor (410), at least one communication circuit (402), one or more processors (404) including processing circuitry, and memory (406) storing instructions.

According to an embodiment of the disclosure, the instructions, when executed by the one or more processors individually or collectively, may cause the electronic device to establish a connection with a first external electronic device (101) via the at least one communication circuit.

According to an embodiment of the disclosure, the instructions, when executed by the one or more processors individually or collectively, may cause the electronic device to, after establishing the connection, detect a user input via the at least one sensor.

According to an embodiment of the disclosure, the instructions, when executed by the one or more processors individually or collectively, may cause the electronic device to, based on the user input, identify whether a broadcast operation is being performed.

According to an embodiment of the disclosure, the instructions, when executed by the one or more processors individually or collectively, may cause the electronic device to, based on identifying that the broadcast operation is being performed, perform an operation corresponding to the user input for at least one broadcast isochronous stream (BIS) transmitted from a second external electronic device (210).

According to an embodiment of the disclosure, the instructions, when executed by the one or more processors individually or collectively, may cause the electronic device to, transmit information related to a result of the operation corresponding to the user input to the first external electronic device via the at least one communication circuit.

According to an embodiment of the disclosure, a method of an electronic device (102; 104; 200) may comprise establishing a connection with a first external electronic device (101).

According to an embodiment of the disclosure, the method may comprise, after establishing the connection, detecting a user input.

According to an embodiment of the disclosure, the method may comprise, based on the user input, identifying whether a broadcast operation is being performed.

According to an embodiment of the disclosure, the method may comprise, based on identifying that the broadcast operation is being performed, performing an operation corresponding to the user input for at least one broadcast isochronous stream (BIS) transmitted from a second external electronic device (210).

According to an embodiment of the disclosure, the method may comprise transmitting information related to a result of the operation corresponding to the user input to the first external electronic device.

According to an embodiment of the disclosure, a storage medium may store at least one computer-readable instruction, and the at least one instruction, when executed by one or more processors (404) of an electronic device (102; 104; 200) individually or collectively, may cause the electronic device to perform at least one operation.

According to an embodiment of the disclosure, the at least one operation may comprise establishing a connection with a first external electronic device (101).

According to an embodiment of the disclosure, the at least one operation may comprise, after establishing the connection, detecting a user input.

According to an embodiment of the disclosure, the at least one operation may comprise, based on the user input, identifying whether a broadcast operation is being performed.

According to an embodiment of the disclosure, the at least one operation may comprise, based on identifying that the broadcast operation is being performed, performing an operation corresponding to the user input for at least one broadcast isochronous stream (BIS) transmitted from a second external electronic device (210).

According to an embodiment of the disclosure, the at least one operation may comprise transmitting information related to a result of the operation corresponding to the user input to the first external electronic device.

### [Description of the Drawings]

FIG. 1 is a block diagram schematically illustrating an electronic device within a network environment according to an embodiment.
FIG. 2 is a diagram schematically illustrating connections between electronic devices which are based on a Bluetooth scheme in a wireless communication network according to an embodiment.
FIG. 3 is a diagram schematically illustrating a structure of a BIG generated and managed by a second external electronic device according to an embodiment.
FIG. 4 is a block diagram schematically illustrating an external electronic device in a wireless communication network according to an embodiment.
FIG. 5 is a diagram schematically illustrating configuration of BIG events and BIS events in a wireless communication network according to an embodiment.
FIG. 6 is a flowchart schematically illustrating an operating method of an electronic device according to an embodiment.
FIG. 7 is a flowchart schematically illustrating an operating method of a first external electronic device according to an embodiment.
FIG. 8 is a drawing for describing a BIS synchronization operation according to an embodiment.
FIG. 9 is a drawing for describing an operation of performing a playback control operation while a BIS synchronization operation is performed according to an embodiment.
FIG. 10 is a drawing for describing an operation of performing a playback control operation while a BIS synchronization operation is performed according to an embodiment.
FIG. 11 is a drawing for describing an operation of performing a playback control operation while a BIS synchronization operation is performed according to an embodiment.
FIG. 12 is a drawing for describing an operation of performing a playback control operation while a BIS synchronization operation is performed according to an embodiment.

### [Mode for Invention]

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe specific embodiments, and are not intended to limit an embodiment of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in an embodiment of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, an embodiment of the disclosure will describe an electronic device, but the electronic device may be referred to as a terminal, a mobile station, a mobile equipment (ME), a user equipment (UE), a user terminal (UT), a subscriber station (SS), a wireless device, a handheld device, and an access terminal (AT). Alternatively, in an embodiment of the disclosure, the electronic device may be a device having a communication function such as, for example, a mobile phone, a personal digital assistant (PDA), a smart phone, a wireless MODEM, and a notebook.

In a detailed description of an embodiment of the disclosure, a standard specified by Bluetooth special interest group (SIG) is referred to, but the main subject of the disclosure can be somewhat modified and applied to other communication systems having a similar technical background without departing from the scope of the disclosure, and the modifications can be made on the basis of determination of those skilled in the art.

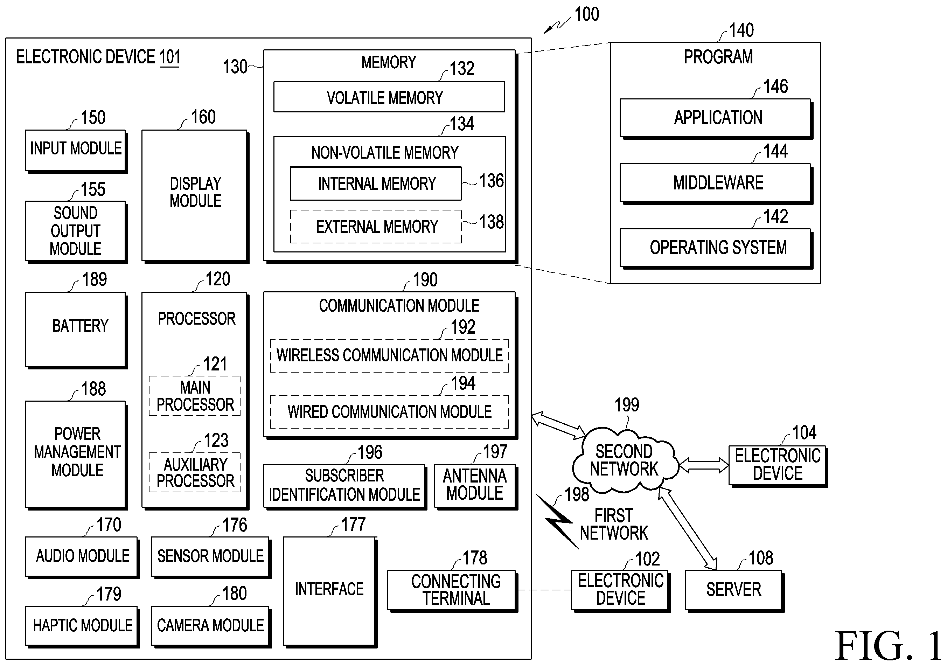

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in nonvolatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the nonvolatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multipleoutput (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or clientserver computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

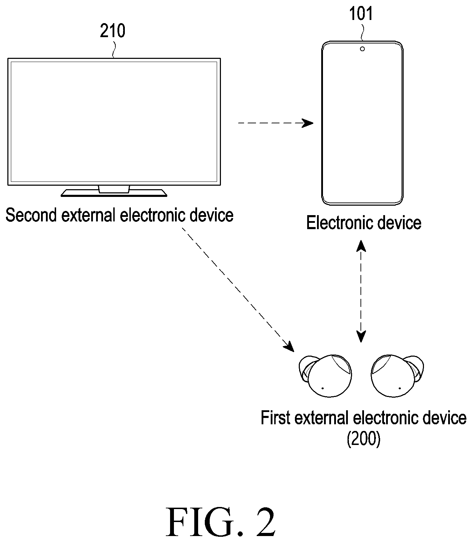

FIG. 2 is a diagram schematically illustrating connections between electronic devices which are based on a Bluetooth scheme in a wireless communication network according to an embodiment.

Referring to FIG. 2, an electronic device 101 (e.g., the electronic device 101 in FIG. 1) may be wirelessly and/or wiredly connected to a plurality of external electronic devices. The plurality of external electronic devices (e.g., an electronic device 102 or an electronic device 104 in FIG. 1) may include a first external electronic device 200 and/or a second external electronic device 210.

For example, the electronic device 101 may be a smartphone. The first external electronic device 200 may be an ear-wearable device and/or a speaker. The first external electronic device 200 may include a first ear bud (e.g., a left ear bud) and/or a second ear bud (e.g., a right ear bud). The second external electronic device 210 may be a TV or another smartphone.

In an embodiment, the electronic device 101, the first external electronic device 200, and/or the second external electronic device 210 may provide an audio service based on a Bluetooth scheme. In an embodiment, the Bluetooth scheme may include a Bluetooth legacy (or Bluetooth classic) scheme, and/or a Bluetooth low energy (BLE) scheme.

According to an embodiment, the electronic device 101 and the first external electronic device 200 may establish a connection (e.g., a communication link) with each other, and may transmit and/or receive data (e.g., audio data) with each other via the established connection. For example, the electronic device 101 and the first external electronic device 200 may establish a communication link based on at least one of a Wi-Fi scheme and/or the Bluetooth scheme, but a scheme by which the electronic device 101 and the first external electronic device 200 establish the communication link is not limited to only at least one of the Wi-Fi scheme and/or the Bluetooth scheme. If the scheme of establishing the communication link between the electronic device 101 and the first external electronic device 200 is the Bluetooth scheme, the communication link established between the electronic device 101 and the first external electronic device 200 may be a connected isochronous stream (CIS). In an embodiment, the electronic device 101 and the first external electronic device 200 may be synchronized to a broadcast isochronous group (BIG).

According to an embodiment, the electronic device 101 may establish a communication link (e.g., a CIS) with the first external electronic device 200 and transmit and receive data with the first external electronic device 200 via the established communication link (e.g., a connection-based communication). The electronic device 101 may operate as a broadcast assistant device and discover audio capabilities of the first external electronic device 200, a broadcast audio stream, and/or data for describing a configuration for the broadcast audio stream transmitted by the first external electronic device 200.

In an embodiment, the first external electronic device 200 may operate as a broadcast sink device. The first external electronic device 200 may be connected to the electronic device 101 or may provide an audio service by being synchronized with the electronic device 101. The first external electronic device 200 may be synchronized with the second external electronic device 210 which operates as a broadcast source device. The first external electronic device 200 may discover or receive data for describing a configuration of a broadcast audio stream, and/or the broadcast audio stream. The first external electronic device 200 may transmit (for example, may broadcast) an audio capability. The first external electronic device 200 may request the electronic device 101 which operates as a broadcast assistant device to perform a scan operation on behalf of the first external electronic device 200. The first external electronic device 200 may receive, from the electronic device 101, data which the electronic device 101 scans on behalf of the first external electronic device 200.

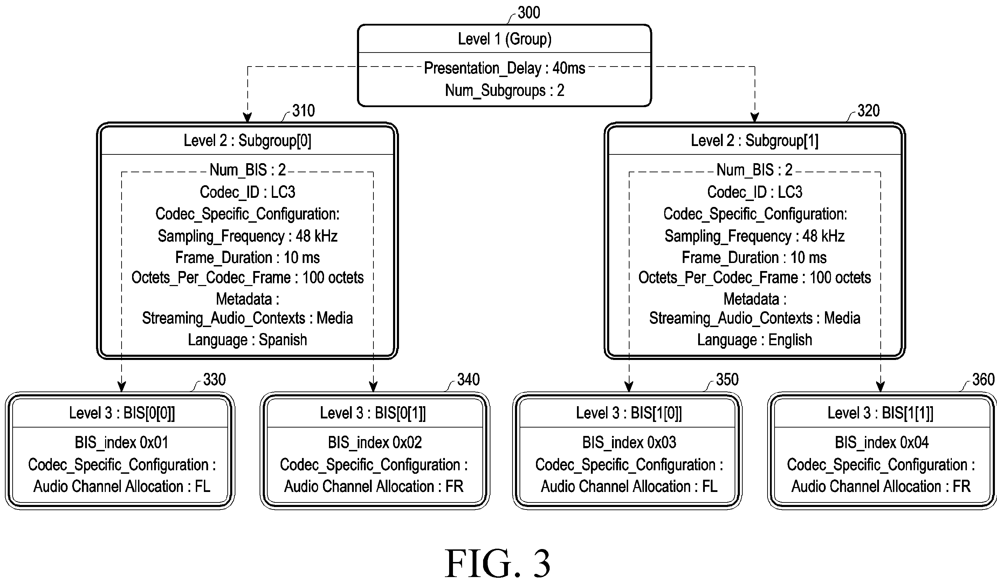

In an embodiment, the second external electronic device 210 may operate as a broadcast source device. In an embodiment, the broadcast source device may be a device which transmits (for example, broadcasts) a broadcast isochronous stream (BIS). In an embodiment, the broadcast source device may generate a BIG including a plurality of (e.g., N) BISs. The broadcast source device may transmit a plurality of audio channel signals via the plurality of BISs, and a BIS index may be assigned to each BIS. The broadcast source device may advertise information related to the BISs included in the BIG. In an embodiment, the broadcast source device may advertise information related to the BIG and the BISs via periodic advertising. A structure of the BIG generated and managed by the second external electronic device 210 will be described below with reference to FIG. 3, so a detailed description thereof will be omitted herein.

The electronic device 101 may operate as a broadcast assistant device. In an embodiment, the broadcast assistant device may monitor information related to BISs transmitted from a broadcast source device. In an embodiment, the broadcast assistant device may determine a BIS to be received from at least one of a plurality of broadcast sink devices connected to the broadcast assistant device based on the monitored information. The broadcast assistant device may transmit the determined BIS index to the broadcast sink device. In an embodiment, the determined BIS index may be provided via an add source operation. The broadcast sink device which receives the determined BIS index via the add source operation may synchronize with a BIS corresponding to the determined BIS index. In an embodiment, the electronic device 101 may broadcast control information including an index of the broadcast sink device and the BIS index determined for the broadcast sink device via the periodic advertising, and the broadcast sink device may receive the control information broadcast by the electronic device 101 and synchronize with the BIS corresponding to the BIS index determined by the electronic device 101. In an embodiment, the broadcast assistant device may transmit the determined BIS index to the broadcast sink device via a connection (e.g., a communication link) established between the broadcast assistant device and the broadcast sink device. In an embodiment, the broadcast assistant device may also change the BIS determined for the at least one of the plurality of broadcast sink devices. The broadcast assistant device may transmit the changed BIS index to the broadcast sink device so that the broadcast sink device may receive the BIS changed by the broadcast assistant device and output audio data of an audio channel corresponding to the received BIS.

In an embodiment, the first external electronic device 200 may operate as a broadcast sink device. The broadcast sink device may receive BISs transmitted from a broadcast source device. According to an embodiment, the broadcast sink device may receive a BIS determined by a broadcast assistant device among the BISs transmitted from the broadcast source device, and output audio data of an audio channel corresponding to the received BIS. The broadcast sink device may receive a BIS index corresponding to a BIS which the broadcast sink device will receive from the broadcast assistant device via a connection (e.g., a communication link) established between the broadcast sink device and the broadcast assistant device. The broadcast sink device may receive the BIS corresponding to the BIS index received from the broadcast assistant device, and while outputting the audio data of the audio channel corresponding to the received BIS, may identify that a BIS which the broadcast sink device needs to receive from the broadcast assistant device is changed. The broadcast sink device may receive the changed BIS index which the sink device needs to receive from the broadcast assistant device while outputting the audio data, and receive a BIS corresponding to the changed BIS index.

In FIG. 2, a case that the second external electronic device 210 operates as the broadcast source device and the electronic device 101 operates as the broadcast assistant device has been described as an example, however, the electronic device 101 may operate as the broadcast source device while also operating as the broadcast assistant device.

The first external electronic device 200 may receive a corresponding BIS based on information broadcasted via the periodic advertising in the electronic device 101 and output audio data of the received BIS.

In FIG. 2, a case that the electronic device 101 and the first external electronic device 200 establish the connection has been described as an example, but the electronic device 101 may establish a connection not only with the first external electronic device 200 but also with at least one other external electronic device. The electronic device 101 and/or the first external electronic device 200 may be electronic devices participating in a multi-party audio service.

FIG. 3 is a diagram schematically illustrating a structure of a BIG generated and managed by a second external electronic device according to an embodiment.

Referring to FIG. 3, a second external electronic device (e.g., a second external electronic device 210 in FIG. 2) may operate as a broadcast source device. The second external electronic device operating as the broadcast source device may generate and manage a plurality of BIGs, and each BIG may include a plurality of subgroups. FIG. 3 will describe the structure of the BIG using one BIG 300 as an example.

The BIG 300 may include a plurality of subgroups, for example, two subgroups 310 and 320. Since FIG. 3 illustrates an example where the BIG 300 includes the two subgroups 310 and 320, Num_Subgroups which is a parameter indicating the number of subgroups included in the BIG is set to "2". A presentation delay for the BIG 300 may represent an initiator defined value that specifies a time after a synchronization point at which audio will be rendered in all acceptors. The initiator defined value may be specified in microseconds. In FIG. 3, the presentation delay may be set to 40ms.

According to an embodiment, each of the two subgroups 310 and 320 may include a plurality of BISs. The subgroup 310 may include two BISs 330 and 340, and the subgroup 320 may include two BISs 350 and 360. In FIG. 3, since each of the subgroups 310 and 320 includes the two BISs, Num_BIS which is the parameter indicating the number of BISs included in the subgroup is set to "2".

A codec identifier (ID) (Codec_ID) for the subgroup 310 may be LC3.

A codec specific configuration (Codec_Specific_Configuration) for the subgroup 310 may be as follows:
(1) Sampling frequency (Sampling_Frequency): 48kHz
(2) Frame duration (Frame_Duration): 10ms
(3) Octets per CODEC frame (Octects_Per_Codec_Frame): 100 octets

Metadata for the subgroup 310 may be as follows:
(1) Streaming audio context (Streaming_Audio_Context): Media
(2) Language: Spanish

The Codec_ID for the subgroup 320 may be LC3.

The Codec_Specific_Configuration for the subgroup 320 may be as follows:
(1) Sampling_Frequency: 48kHz
(2) Frame_Duration: 10ms
(3) Octects_Per_Codec_Frame: 100 octets

The metadata for the subgroup 310 may be as follows:
(1) Streaming_Audio_Context: Media
(2) Language: English

According to an embodiment, a BIS index (BIS_index) of the BIS 330 may be 0x01, and a BIS_index of the BIS 340 may be 0x02. Codec_Specific_Configuration of the BIS 330 may include an Audio Channel Allocation set to front left (FL). Codec_Specific_Configuration of the BIS 340 may include Audio Channel Allocation set to front right (FR).

According to an embodiment, a BIS_index of the BIS 350 may be 0x03, and a BIS_index of the BIS 360 may be 0x04. Codec_Specific_Configuration of the BIS 350 may include Audio Channel Allocation set to FL. Codec_Specific_Configuration of the BIS 360 may include Audio Channel Allocation set to FR.

According to an embodiment, a broadcast sink device (e.g., an electronic device 102 or an electronic device 104 in FIG. 1, or a first external electronic device 200 in FIG. 2) may operate as a broadcast audio scan service (BASS) server which is based on a generic attribute profile (GATT). A broadcast assistant device (e.g., an electronic device 101 of FIG. 1 or 2) may operate as a BASS client. If a broadcast receive state characteristic is changed, the BASS server may notify the BASS client of the changed broadcast receive state characteristic.

A detailed description of the broadcast receive state characteristic is specified in Broadcast Audio Scan Service Revision v1.0 which is a specification provided by Generic Audio Working Group, and this may be described as follows:

The broadcast receive state characteristic may be used by the BASS server to expose information about the broadcast source device (e.g., the electronic device 102 or the electronic device 104 in FIG. 1, or the second external electronic device 210 in FIG. 2). The information about the broadcast source device may indicate a current synchronization state of the BASS server to a PA and/or a BIG which includes one or more subgroups including one or more BISs transmitted by the broadcast source device. The broadcast receive state characteristic may be used for informing BASS clients whether the BASS server has detected that a BIS is encrypted, whether the BASS server requires a broadcast code (Broadcast_Code), and whether the BASS server is decrypting the BIS. If a broadcast receive state characteristic value is not empty (length 0), the broadcast receive state characteristic may have a format defined as shown in Tables 1-1 and 1-2 below.

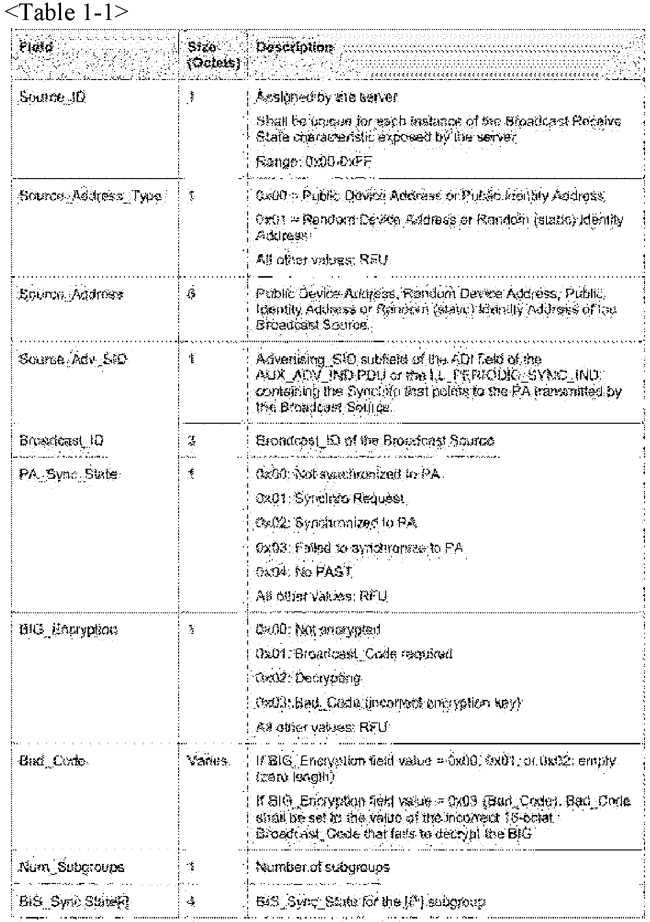

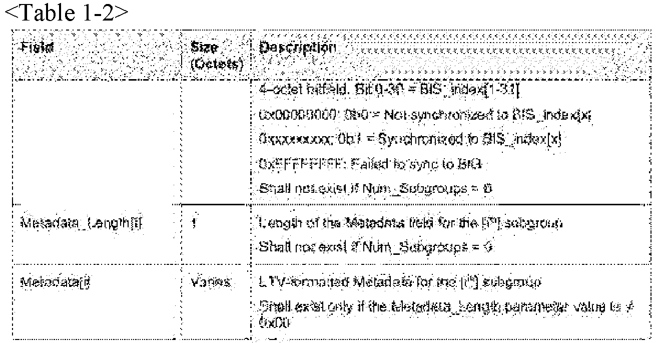

In Table 1-1, the Source_ID field may indicate a Source_ID, the Source_ID may be assigned by the BASS server and may be unique for each instance of a broadcast receive state characteristic exposed by a BASS. For example, a size of the Source_ID field may be implemented with 1 octet, and its range may be 0x00-0xFF.

In Table 1-1, the Source_Address_Type field may indicate Source_Address_Type, and if a field value of the Source_Address_Type field is 0x00, it may indicate a public device address or a public identity address (0x00 = Public Device Address or Public Identity Address). If the field value of the Source_Address_Type field is 0x01, it may indicate a random device address or a random (static) identity address (0x01 = Random Device Address or Random (static) Identity Address). For example, a size of the Source_Address_Type field may be implemented with 1 octet. The remaining field values of the Source_Address_Type field may be reserved for future use (All other values: RFU).

In Table 1-1, the Source_Address field may indicate a public device address, a random device address, a public identity address, or a random (static) identity address of the broadcast source device. For example, a size of the Source_Address field may be 6 octets.

In Table 1-1, the Source_Adv_SID field may be an Advertising_SID subfield of an AdvDataInfo (ADI) field of an AUX_ADV_IND protocol data unit (PDU) or an LL_PERIODIC_SYNC_1ND PDU including synchronization information (SyncInfo) that points to periodic advertising (PA) transmitted by the broadcast source device. For example, a size of the Source_Adv_SID field may be 1 octet.

In Table 1-1, the Broadcast_ID field may indicate a broadcast ID (Broadcast_ID) of the broadcast source device. For example, a size of the Broadcast_ID field may be 3 octets.

In Table 1-1, if a field value of the PA_Sync_State field is "0x00", it may indicate that it is not synchronized to a PA (0x00: Not synchronized to PA), if the field value of the PA_Sync_State field is "0x01", it may indicate a synchronization information request (0x01: SyncInfo Request), if the field value of the PA_Sync_State field is "0x02", it may indicate that it is synchronized to the PA (0x02: Synchronized to PA), if the field value of the PA_Sync_State field is "0x03", it may indicate that synchronization to the PA has failed (0x03: Failed to synchronize to PA), and if the field value of the PA_Sync_State field is "0x04", it may indicate that a periodic advertising synchronization transfer (PAST) procedure does not exist (0x04: No PAST). For example, a size of the PA_Sync_State field may be 1 octet. The remaining field values of the PA_Sync_State field may be reserved for future use (All other values: RFU).

In Table 1-1, if a field value of the BIG_Encryption field is "0x00", it may indicate that it is not encrypted (0x00: Not encrypted), if the field value of the BIG_Encryption field is "0x01", it may indicate that a broadcast code is required (0x01: Broadcast_Code required), if the field value of the BIG_Encryption field is "0x02", it may indicate that it is decrypting (0x02: Decrypting), and if the field value of the BIG_Encryption field is "0x03", it may indicate a bad code (0x03: Bad_Code (incorrect encryption key)). The bad code may indicate an incorrect encryption key. For example, a size of the BIG_Encryption field may be 1 octet. The remaining field values of the BIG_Encryption field may be reserved for future use (All other values: RFU).

In Table 1-1, if a field value of the BIG_Encryption field is 0x00, 0x01, or 0x02, the Bad_Code field may be empty. A fact that the Bad_Code field is empty may indicate that a length of the Bad_Code field is zero (0). (If BIG_Encryption field value = 0x00, 0x01, or 0x02: empty (zero length)). If the field value of the BIG_Encryption field is 0x03 (Bad_Code), the field value of the Bad_Code field may be set to a value of an incorrect 16-octet broadcast code that fails to decrypt a BIG (If BIG_Encryption field value = 0x03 (Bad_Code), Bad_Code shall be set to the value of the incorrect 16-octet Broadcast_Code that fails to decrypt the BIG). For example, a size of the BIG_Encryption field may be variable.

In Table 1-1, the Num_Subgroups field may indicate the number of subgroups. For example, a size of the Num_Subgroups field may be 1 octet.

In Table 1-1, the BIS_Sync State[i] field may indicate BIS synchronization state (BIS_Sync_State) for the i-th subgroup. Bits 0-30 of the BIS_Sync State[i] field may indicate BIS index (BIS index) 1 to BIS index 31 (Bits 0-30 = BIS_index[1-31]), and if the field value of the BIS_Sync State[i] field is 0x00000000: 0b0, it may indicate that it is not synchronized to the BIS index x (BIS_index[x]) (0x00000000: 0b0 = Not synchronized to BIS_index[x]), if the field value of the BIS_Sync State[i] field is 0xxxxxxxxx: 0b1, it may indicate that it is synchronized to the BIS index x (0xxxxxxxxx: 0b1 = Synchronized to BIS_index[x]), if the field value of the BIS_Sync State[i] field is 0xFFFFFFFF, it may indicate that synchronization to the BIG has failed (0xFFFFFFFF: Failed to sync to BIG), and if the value of the Num_Subgroups field is set to 0, the BIS_Sync State[i] field will not exist (Shall not exist if Num_Subgroups = 0). For example, a size of the BIS_Sync State[i] field may be 4 octets.

The BIS_Sync State[i] field may be used to expose a synchronization state of the BASS server with respect to one or more BISs for one or more subgroups included in a BIG (The BIS_Sync_State field is used to expose the synchronization state of the server with respect to one or more BISes for one or more subgroups in a BIG).

If the BASS server has accepted an add source operation written by the BASS client, the BASS server may follow an operation defined in section 3.1.1.4 of Broadcast Audio Scan Service Revision v1.0 to write a field value of the BIS_Sync_State field (If the server has accepted an Add Source operation written by the client, the server shall follow the behavior defined in Section 3.1.1.4 to write the value of the BIS_Sync_State field). The add source operation may be used to provide the BASS server with information about the broadcast source device.

If the BASS server has accepted a modify source operation written by the BASS client, the BASS server may follow an operation defined in section 3.1.1.5 in Broadcast Audio Scan Service Revision v1.0 to write a field value of the BIS_Sync_State field (If the server has accepted a Modify Source operation written by the client, the server shall follow the behavior defined in Section 3.1.1.5 to write the value of the BIS_Sync_State field). The modify source operation may be used for providing the BASS server with metadata information about the broadcast source device. The modify source operation may be used for requesting the BASS server to add or update metadata about a broadcast source, and/or for requesting the BASS server to synchronize to the PA and/or the BIS, or for requesting the BASS server to stop synchronization to the PA and/or BIS.

If the BASS server has autonomously synchronized to the BIS, the BASS server will set a BIS_index value of the BIS to "0b1" for a subgroup including the BIS in the BIS_Sync State[i] of the broadcast receive state characteristic (If the server has autonomously synchronized to a BIS, the server shall set the BIS_index value of that BIS to 0b1 for the subgroup containing that BIS in the BIS_Sync_State field of the Broadcast Receive State characteristic).

If the BASS server has autonomously synchronized to the BIS and then lost or stopped synchronization with the BIS, the BASS server will set the BIS index value of the BIS to "0b0" for the subgroup including the BIS in the BIS_Sync State[i] field of the broadcast receive state characteristic (If the server has autonomously synchronized to a BIS and then lost or stopped synchronization with that BIS, the server shall set the BIS_index value of that BIS to 0b0 for the subgroup containing that BIS in the BIS_Sync_State field of the Broadcast Receive State characteristic).

In Table 1-2, the Metadata_Length[i] field may indicate a length of the metadata field for the i-th subgroup. If a value of the Num_Subgroups field is set to 0, the Metadata_Length[i] field will not exist (Shall not exist if Num_Subgroups = 0). For example, a size of the Metadata_Length[i] field may be 1 octet.

In Table 1-2, the Metadata[i] field may indicate length, type, value (LTV)-format data for the i-th subgroup (LTV-formatted Metadata for the [i th] subgroup). The Metadata[i] field may exist only if the value of the Metadata_Length[i] field is not 0x00 (the Metadata_Length parameter value is ≠ OxOO).

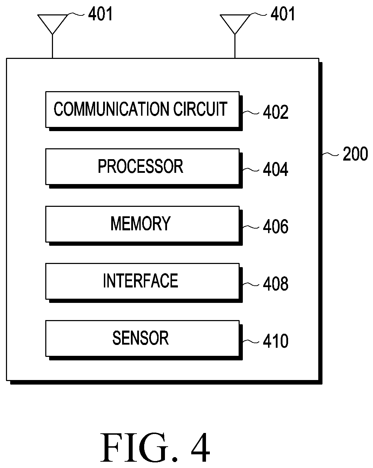

FIG. 4 is a block diagram schematically illustrating an external electronic device in a wireless communication network according to an embodiment.

Referring to FIG. 4, a first external electronic device 200 (e.g., an electronic device 104 in FIG. 1 or a first external electronic device 200 in FIG. 2) may be a device implementing a Bluetooth scheme (e.g., a Bluetooth legacy scheme and/or a BLE scheme). The first external electronic device 200 may include a communication circuit 402 (e.g., a communication module 190 in FIG. 1) which transmits and receives signals with an electronic device (e.g., an electronic device 101 in FIG. 1 or FIG. 2), for example, a peer device and/or another electronic device (e.g., a second external electronic device 210 in FIG. 2) by using one or more antennas 401 (e.g., an antenna module 197 in FIG. 1).

The first external electronic device 200 may include a processor 404 (e.g., a processor 120 in FIG. 1) which may be implemented in one or more single-core processors or one or more multi-core processors, and a memory 406 (e.g., a memory 130 in FIG. 1) which stores instructions for an operation of the first external electronic device 200.

The first external electronic device 200 may include an interface module 408 (e.g., an interface 177 in FIG. 1) which provides a wired and/or wireless interface for communicating with components outside a network.

According to an embodiment, the first external electronic device 200 may include a plurality of communication circuits, one of the plurality of communication circuits may be a communication circuit which is based on a Wi-Fi scheme, and another of the plurality of communication circuits may be a communication circuit which is based on a Bluetooth scheme, e.g., a BLE scheme. According to an embodiment, the plurality of communication circuits may include a communication circuit 402, and the communication circuit 402 may be a communication circuit which is based on the Wi-Fi scheme or a communication circuit which is based on the BLE scheme.

According to an embodiment, the first external electronic device 200 does not separately include a communication circuit which is based on the Wi-Fi scheme and a communication circuit which is based on the BLE scheme, and may include one communication circuit capable of supporting both the Wi-Fi scheme and the BLE scheme. According to an embodiment, the one communication circuit capable of supporting both the Wi-Fi scheme and the BLE scheme may be the communication circuit 402.

According to an embodiment, the first external electronic device 200 may include a sensor 410 (e.g., a sensor module 176 in FIG. 1), and the sensor 410 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor 410 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, and/or an illuminance sensor. According to an embodiment, the sensor 410 may detect a state corresponding to a user input.

The Bluetooth scheme may include a Bluetooth legacy (or Bluetooth classic) scheme and/or a Bluetooth low energy (BLE) scheme. An electronic device (e.g., an electronic device 101 in FIG. 1 or FIG. 2) (e.g., a smart phone) that provides an audio service based on the BLE scheme may independently establish a communication link (e.g., a CIS) with each of a plurality of external electronic devices (e.g., an electronic device 102 or an electronic device 104 in FIG. 1, a first external electronic device 211 in FIG. 2, or a second external electronic device 210 in FIG. 2), and transmit and receive data to and from the external electronic devices via the established communication link (e.g., a connection-based communication). The electronic device may establish a communication link (e.g., a BIS) and transmit and receive data to and from the external electronic devices via the established communication link (e.g., a broadcast-based communication). Like this, the audio service based on the BLE scheme may be provided via a connection-based CIS or a non-connection-based BIS.

An audio service provided in the BLE scheme may be a next-generation Bluetooth audio service. In a Bluetooth legacy scheme, a Bluetooth basic rate/enhanced data rate (BR/EDR) scheme is used, and an advanced audio distribution profile (A2DP) or a hands-free profile (HFP) is used, whereas in the BLE scheme, a broadcast audio scheme for a multi-stream audio scheme and an audio sharing scheme may be used. In the audio sharing scheme, one or more audio packets may be provided to an infinite number of audio sink devices. To support the audio sharing scheme, a broadcast isochronous group (BIG) and a broadcast isochronous stream (BIS) have been proposed. In the audio sharing scheme, an isochronous broadcaster and a synchronized receiver may be required.

The BIS may be a logical transport used to transfer one or more isochronous data streams to all devices for the BIS within a range. The BIS may include one or more sub events for transmitting isochronous data packets. A subevent may include time durations in which at least one synchronized receiver may receive a broadcast isochronous PDU. The BIS may support transmission of a plurality of new isochronous data packets in every BIS event. There is no acknowledgment protocol for the BIS, so traffic is unidirectional from a broadcasting device.

The BIG may be generated by the isochronous broadcaster. The BIG may include one or more BISs. A plurality of BISs included in the BIG may have a common timing reference based on a broadcaster and may be synchronized in a time domain. For example, a left channel and a right channel of an audio stereo stream, received by separate devices, may need to be rendered simultaneously. The plurality of BISs included in the BIG may be scheduled sequentially or in an interleaved arrangement.

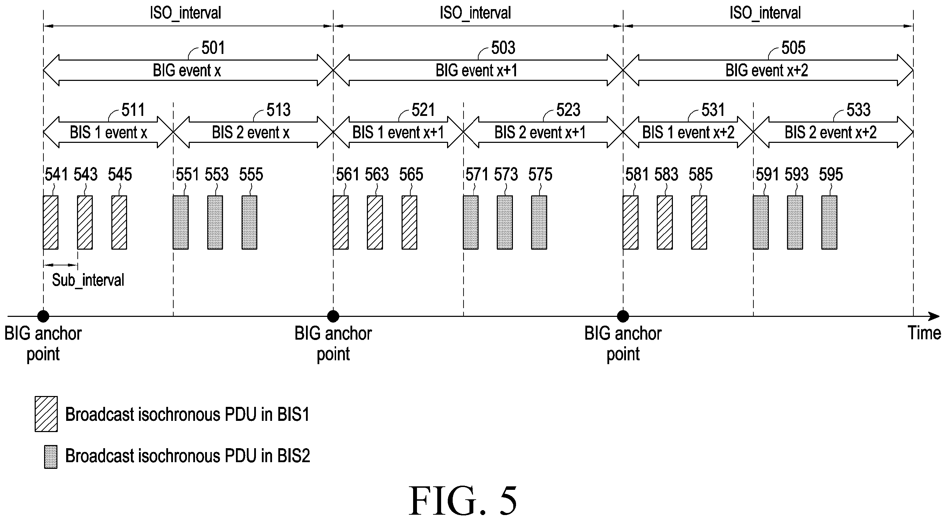

FIG. 5 is a diagram schematically illustrating configuration of BIG events and BIS events in a wireless communication network according to an embodiment.

Referring to FIG. 5, each of BIG events (e.g., a BIG event x 501, a BIG event x+1 503, and a BIG event x+2 503) may include two BIS events. For example, the BIG event x 501 may include a BIS1 event x 511 and a BIS2 event x 513, the BIG event x+1 503 may include a BIS1 event x+1 521 and a BIS2 event x+ 1 523, and the BIG event x+2 505 may include a BIS1 event x+2 531 and a BIS2 event x+2 533.

A BIG event may include one or more BIS protocol data units (PDUs). A link layer may transmit BIS PDUs only in BIG events. The link layer may transmit only BIS PDUs as part of the BIG event. Each BIG event may be divided into Num_BIS BIS events and a control subevent (if present). Each BIS event may be divided into NSE subevents. Each BIS event starts at a moment called BIS anchor point and ends after the last subevent of each BIS event. Each BIG event starts at a moment called BIG anchor point, and ends after one control subevent if there is the one control subevent, and otherwise, at the end of the last constituent BIS event.

BIG anchor points may be spaced regularly at ISO_Intervals. BIS anchor points for a BIS n of a BIG may be (n - 1) X BIS_Spacing after the BIG anchor points, so may be also spaced regularly, ISO_Interval apart. BIS_Spacing may be time between start of subevents in adjacent BISes included in the BIG and also time between start of the first subevent of the last BIS and a control subevent. Subevents of each BIS may be Sub_Interval apart. The Isochronous broadcaster may terminate each BIG event at least T_IFS before a BIG anchor point of the next BIG event. T_IFS may represent a time inter frame space and indicate a time interval between consecutive packets on the same channel index.

In the BIS1 event x 511, a broadcast isochronous PDU 541, a broadcast isochronous PDU 543, and a broadcast isochronous PDU 545 may be transmitted.

In the BIS2 event x 513, a broadcast isochronous PDU 551, a broadcast isochronous PDU 553, and a broadcast isochronous PDU 555 may be transmitted.

In the BIS1 event x+1 521, a broadcast isochronous PDU 561, a broadcast isochronous PDU 563, and a broadcast isochronous PDU 565 may be transmitted.

In the BIS2 event x+1 523, a broadcast isochronous PDU 571, a broadcast isochronous PDU 573, and a broadcast isochronous PDU 575 may be transmitted.

In the BIS1 event x+2 531, a broadcast isochronous PDU 581, a broadcast isochronous PDU 583, and a broadcast isochronous PDU 585 may be transmitted.

In the BIS2 event x+2 533, a broadcast isochronous PDU 591, a broadcast isochronous PDU 593, and a broadcast isochronous PDU 595 may be transmitted.

According to an embodiment of the disclosure, an electronic device (102; 104; 200) may comprise at least one sensor (410), at least one communication circuit (402), one or more processors (404) including processing circuitry, and memory (406) storing instructions.

According to an embodiment of the disclosure, the instructions, when executed by the one or more processors individually or collectively, may cause the electronic device to establish a connection with a first external electronic device (101) via the at least one communication circuit.

According to an embodiment of the disclosure, the instructions, when executed by the one or more processors individually or collectively, may cause the electronic device to, after establishing the connection, detect a user input via the at least one sensor.

According to an embodiment of the disclosure, the instructions, when executed by the one or more processors individually or collectively, may cause the electronic device to, based on the user input, identify whether a broadcast operation is being performed.

According to an embodiment of the disclosure, the instructions, when executed by the one or more processors individually or collectively, may cause the electronic device to, based on identifying that the broadcast operation is being performed, perform an operation corresponding to the user input for at least one broadcast isochronous stream (BIS) transmitted from a second external electronic device (210).

According to an embodiment of the disclosure, the instructions, when executed by the one or more processors individually or collectively, may cause the electronic device to, transmit information related to a result of the operation corresponding to the user input to the first external electronic device via the at least one communication circuit.

According to an embodiment of the disclosure, the instructions, when executed by the one or more processors individually or collectively, may cause the electronic device to perform an asynchronization operation for the at least one BIS, based on the user input being a user input for pausing a broadcast service corresponding to the at least one BIS which is being played.

According to an embodiment of the disclosure, the instructions, when executed by the one or more processors individually or collectively, may cause the electronic device to transmit, to the first external electronic device via the at least one communication processor, at least one of information indicating that the electronic device is not synchronized to the at least one BIS, or information related to a subgroup in which the at least one BIS is included, based on the user input being the user input for pausing the broadcast service corresponding to the at least one BIS which is being played.

According to an embodiment of the disclosure, the subgroup may be included in a broadcast isochronous group (BIG).

According to an embodiment of the disclosure, the instructions, when executed by the one or more processors individually or collectively, may cause the electronic device to, based on the user input being a user input for playing the broadcast service corresponding to the at least one BIS which is being paused, perform a synchronization operation for the at least one BIS.

According to an embodiment of the disclosure, the instructions, when executed by the one or more processors individually or collectively, may cause the electronic device to, based on the user input being the user input for playing the broadcast service corresponding to the at least one BIS which is being paused, transmit, to the first external electronic device via the at least one communication processor, at least one of information indicating that the electronic device is synchronized to the at least one BIS, or information related to a subgroup in which the at least one BIS is included.

According to an embodiment of the disclosure, the subgroup may be included in a broadcast isochronous group (BIG).

According to an embodiment of the disclosure, the instructions, when executed by the one or more processors individually or collectively, may cause the electronic device to, based on the at least one BIS including a first BIS included in a first subgroup included in a broadcast isochronous group (BIG) and a second BIS included in a second subgroup included in the BIG, and the user input being a user input for changing a first broadcast service corresponding to the first BIS which is being played to a second broadcast service corresponding to the second BIS, perform an asynchronization operation for the first BIS and perform a synchronization operation for the second BIS.

According to an embodiment of the disclosure, the instructions, when executed by the one or more processors individually or collectively, may cause the electronic device to, based on the user input being the user input for changing the first broadcast service corresponding to the first BIS which is being played to the second broadcast service corresponding to the second BIS, transmit, to the first external electronic device via the at least one communication processor, information indicating that the electronic device is not synchronized to the first BIS and is synchronized to the second BIS, and information related to a second subgroup in which the second BIS is included.

According to an embodiment of the disclosure, the second subgroup may be included in a broadcast isochronous group (BIG).

According to an embodiment of the disclosure, the instructions, when executed by the one or more processors individually or collectively, may cause the electronic device to, based on the user input being a user input for changing the second broadcast service corresponding to the second BIS which is being played to the first broadcast service corresponding to the first BIS, perform an asynchronization operation for the second BIS and perform a synchronization operation for the first BIS.

According to an embodiment of the disclosure, the instructions, when executed by the one or more processors individually or collectively, may cause the electronic device to, based on the user input being the user input for changing the second broadcast service corresponding to the second BIS which is being played to the first broadcast service corresponding to the first BIS, transmit, to the first external electronic device via the at least one communication processor, information indicating that the electronic device is not synchronized to the second BIS and is synchronized to the first BIS, and information related to a first subgroup in which the first BIS is included.

According to an embodiment of the disclosure, the first subgroup may be included in the BIG.

According to an embodiment of the disclosure, the broadcast operation may be a broadcast operation from a time point at which the electronic device receives an add source operation code indicating an add source operation from the first external electronic device operating as a broadcast assistant device to a time point at which the electronic device receives a remove source operation code indicating a remove source operation from the second external electronic device operating as a broadcast source device.

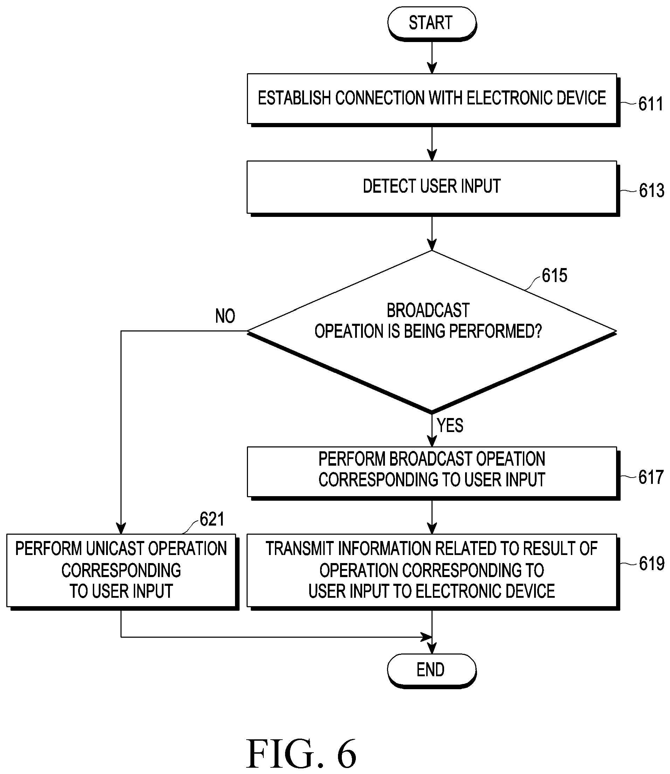

FIG. 6 is a flowchart schematically illustrating an operating method of a first external electronic device according to an embodiment.

Referring to FIG. 6, in operation 611, a first external electronic device (e.g., an electronic device 102 or an electronic device 104 in FIG. 1, or a first external electronic device 200 in FIG. 2 or FIG. 4) (e.g., one or more processors including processing circuitry) (e.g., a processor 404 in FIG. 4) may establish a connection (e.g., a communication link) with an electronic device (e.g., an electronic device 101 in FIG. 1 or FIG. 2) via at least one communication circuit 402. For example, the first external electronic device may establish the communication link with the electronic device based on at least one of a Wi-Fi scheme and/or a Bluetooth scheme, but a scheme by which the first external electronic device establishes the communication link with the electronic device is not limited to the at least one of the Wi-Fi scheme and/or the Bluetooth scheme. For example, the electronic device may be a broadcast assistant device, and the first external electronic device may be a broadcast sink device.

After establishing the connection with the electronic device, the first external electronic device may detect a user input via at least one sensor (e.g., a sensor 410 in FIG. 4) in operation 613. In an embodiment, the user input may be a user input (e.g., a single tap) for pausing an audio service which is currently playing. In an embodiment, the user input may be a user input (e.g., a single tap) for playing an audio service which is currently paused. In an embodiment, the user input may be a user input (e.g., a double tap) for changing a first audio service which is playing to a second audio service. In an embodiment, the user input may be a user input for changing the second audio service which is playing to the first audio service.

The first external electronic device which detects the user input may determine, in operation 615, whether a broadcast operation is being performed. In an embodiment, the broadcast operation may represent a broadcast operation performed from a time point when the first external electronic device receives an add source operation code indicating an add source operation from a second external electronic device (e.g., a second external electronic device 210 in FIG. 2) to a time point when the first external electronic device receives a remove source operation code indicating a remove source operation from the second external electronic device. For example, the second external electronic device may be a broadcast source device. The add source operation may be used for providing information about the broadcast source device to a broadcast audio scan service (BASS) server which is based on a generic attribute profile (GATT). A BASS client may be a broadcast assistant device, and the BASS server may be a broadcast sink device.

The add source operation code may be included in broadcast audio scan control point characteristic operation codes, and the broadcast audio scan control point characteristic operation codes may be defined as shown in Table A-1 and Table A-2 below.

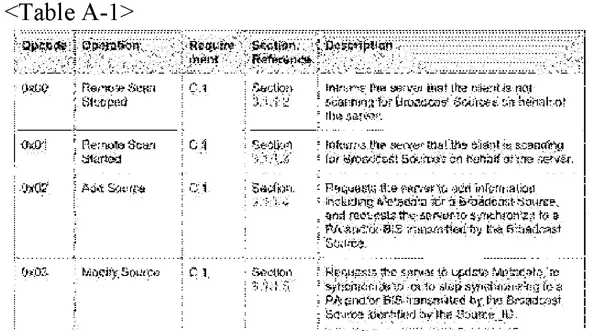

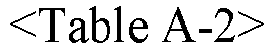

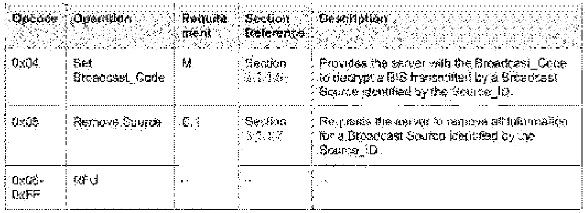

A detailed description of the broadcast audio scan control point characteristic operation codes is specified in section 3.1 in Broadcast Audio Scan Service Revision v1.0 which is a specification provided by Generic Audio Working Group, so a redundant description will be omitted herein.

In an embodiment, the add source operation may have a format defined as in Table B-1 and Table B-2 below.

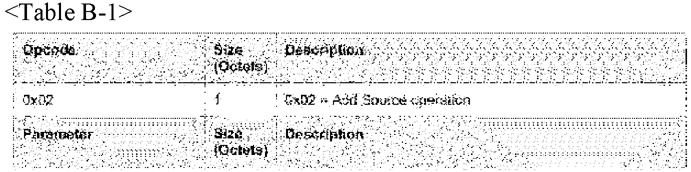

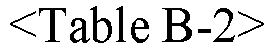

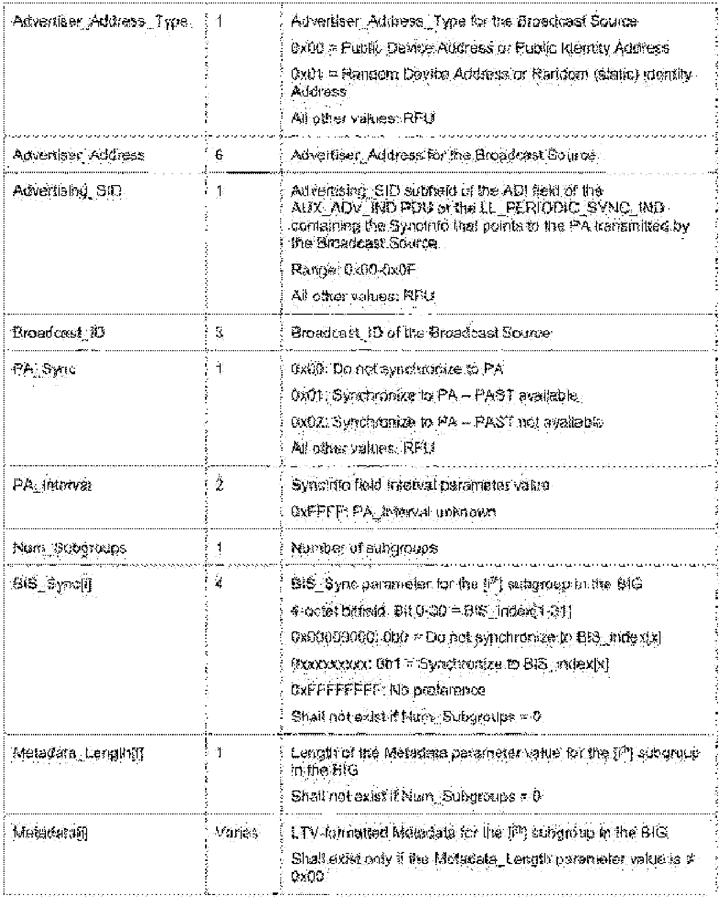

A detailed description of the add source operation is specified in section 3.1.1.4 Add Source operation in Broadcast Audio Scan Service Revision v1.0, so a redundant description will be omitted herein.

The remove source operation may be used by the BASS client to request the BASS server to remove information about a broadcast source device identified by a source identifier (source_ID) in a broadcast receive state characteristic.

In an embodiment, the remove source operation may have a format defined as in Table C below.

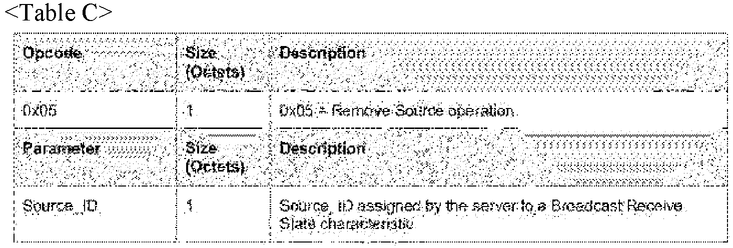

A detailed description of the remove source operation is specified in section 3.1.1.7 Remove Source operation in Broadcast Audio Scan Service Revision v1.0, so a redundant description will be omitted herein.

If the broadcast operation is not being performed (Operation 615-No), the first external electronic device may perform a unicast operation corresponding to the user input in operation 621. For example, if a unicast audio service is being played on the first external electronic device and the user input detected in operation 613 is a single tap, the first external electronic device may pause the unicast audio service being played. For another example, if the unicast audio service is paused on the first external electronic device and the user input detected in operation 613 is the single tap, the first external electronic device may play the unicast audio service being paused. For still another example, if a first unicast audio service is being played on the first external electronic device and the user input detected in operation 613 is a double tap, the first external electronic device may change the first unicast audio service to a second unicast audio service. For still another example, if the second unicast audio service is being played on the first external electronic device and the user input detected in operation 613 is the double tap, the first external electronic device may change the second unicast audio service to the first unicast audio service.

If the broadcast operation is being performed (Operation 615-Yes), the first external electronic device may perform a broadcast operation corresponding to the user input in operation 617.

For example, if the broadcast audio service corresponding to the at least one BIS is being played on the first external electronic device and the user input detected in operation 613 is the single tap, the first external electronic device may pause the broadcast audio service being played. The operation of pausing the broadcast audio service being played may include an asynchronization operation for the at least one BIS.

For another example, if the broadcast audio service corresponding to the at least one BIS is being paused on the first external electronic device and the user input detected in operation 613 is the single tap, the first external electronic device may play the broadcast audio service being paused. The operation of playing the broadcast audio service being paused may include a synchronization operation for the at least one BIS.

For still another example, if a first broadcast audio service corresponding to a first BIS is being played on a first external electronic device, and the user input detected in operation 613 is a double tap, the first external electronic device may change the first broadcast audio service to a second broadcast audio service corresponding to a second BIS. In an embodiment, the first BIS may be included in a first subgroup included in the BIG, and the second BIS may be included in a second subgroup included in the BIG. The operation of changing the first broadcast audio service to the second broadcast audio service may perform an asynchronization operation for the first BIS and may include a synchronization operation for the second BIS.

For still another example, if the second broadcast audio service is being played on the first external electronic device and the user input detected in operation 613 is the double tap, the first external electronic device may change the second broadcast audio service to the first broadcast audio service. The operation of changing the second broadcast audio service to the first broadcast audio service may include an operation of performing an asynchronization operation for the second BIS and performing a synchronization operation for the first BIS.

The first external electronic device which performs the operation corresponding to the user input may transmit information related to a result of the operation corresponding to the user input to the electronic device via the at least one communication circuit in operation 619.

In an embodiment, if the user input is a user input for pausing a broadcast service, which is being played, corresponding to at least one BIS, information related to the result of the operation corresponding to the user input may include at least one of information indicating that the first external electronic device is not synchronized to the at least one BIS, or information related to a subgroup in which the at least one BIS is included. In an embodiment, the subgroup may be included in the BIG.

In an embodiment, if the user input is a user input for playing a broadcast service, which is paused, corresponding to at least one BIS, the information related to the result of the operation corresponding to the user input may include at least one of information indicating that the first external electronic device is synchronized to the at least one BIS, or the information related to the subgroup in which the at least one BIS is included.

In an embodiment, if the user input is a user input for changing the first broadcast service, which is being played, corresponding to the first BIS to the second broadcast service corresponding to the second BIS, the information related to the result of the operation corresponding to the user input may include at least one of information indicating that the first external electronic device is not synchronized to the first BIS and is synchronized to the second BIS, or information related to a second subgroup in which the second BIS is included.

In an embodiment, if the user input is a user input for changing the second broadcast service, which is being played, corresponding to the second BIS to the first broadcast service corresponding to the first BIS, the information related to the result of the operation corresponding to the user input may include at least one of information indicating that the first external electronic device is not synchronized to the second BIS and is synchronized to the first BIS, or information related to a first subgroup in which the first BIS is included.

. If BIS synchronization is not performed, add information on how to perform this.

. Add a flowchart of how to operate per user input. In this case, there may be a difference in an operation depending on which device receives input from left/right buds.

. When input is received from one device of the left/right buds, contents on how to notify another device of this and to operate.

In an embodiment, the first external electronic device may include a first earbud (e.g., a left earbud) and/or a second earbud (e.g., a right earbud). If the first external electronic device includes the first earbud and the second earbud, the user input may be implemented differently, and this may depend on implementation of a manufacturer of the first external electronic device. For example, the user input for changing the first audio service which is being played to the second audio service may be a double tap for the first earbud, or the user input for changing the second audio service which is being played to the first audio service may be a double tap for the second earbud. In this way, if the first external electronic device includes the first earbud and the second earbud, an operation based on the first earbud and an operation based on the second earbud may be different, and this may depend on the implementation of the manufacturer of the first external electronic device.

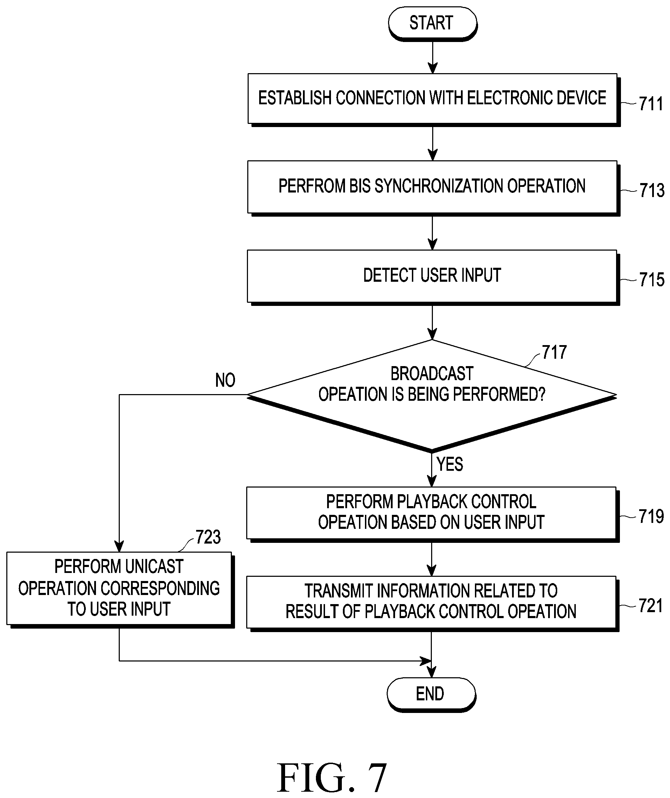

FIG. 7 is a flowchart schematically illustrating an operating method of a first external electronic device according to an embodiment.

Referring to FIG. 7, in operation 711, a first external electronic device (e.g., an electronic device 102 or an electronic device 104 in FIG. 1, or a first external electronic device 200 in FIG. 2 or FIG. 4) (e.g., a processor 404 in FIG. 4) may establish a connection (e.g., a communication link) with an electronic device (e.g., an electronic device 101 in FIG. 1 or FIG. 2) via at least one communication circuit (e.g., a communication circuit 402). In an embodiment, the first external electronic device may operate as a broadcast sink device. In an embodiment, the electronic device may operate as a broadcast assistant device. A broadcast source device, the broadcast assistant device, and the broadcast sink device may be implemented similar to or substantially the same as those described in FIG. 2 or FIG. 3, so a detailed description thereof will be omitted herein. In an embodiment, the first external electronic device may establish the connection with the electronic device based on at least one of a Wi-Fi scheme and/or a Bluetooth scheme.

In operation 711, an operation of establishing the connection between the first external electronic device and the electronic device may be described more specifically as follows.

In an embodiment, the first external electronic device (e.g., an ear wearable device and/or a speaker) may establish the connection with the electronic device (e.g., a smart phone) based on a wireless communication scheme (e.g., a BLE scheme). The first external electronic device may transmit an advertising signal to the surroundings in a multicast scheme or a broadcast scheme. The advertising signal may include information related to a connection or account (e.g., pairing), and may be transmitted to non-specific surrounding devices (e.g., the electronic device) using a wireless communication (e.g., a BLE communication). For example, the advertising signal may include at least one of identification information of the first external electronic device, user account information associated with an account of a user of the first external electronic device, current pairing information which is information regarding whether the first external electronic device is currently paired with another device, a pairing list which is a list including information regarding devices with which the first external electronic device has been previously paired, simultaneous pairing information which is information regarding devices with which the first external electronic device may be simultaneously paired, transmission power (TX power) of the first external electronic device, or battery status information which is information regarding a remaining battery level of the first external electronic device.

According to an embodiment, the first external electronic device may transmit (for example, broadcast or multicast) an advertising signal based on a set condition. For example, the set condition may include at least one of a condition in which power is supplied to the first external electronic device, a condition in which a set period is reached, or a condition in which a user input is identified.

If the electronic device receives the advertising signal transmitted from the first external electronic device, the electronic device may output a user interface (UI) for connection between the first external electronic device and the electronic device on a display (e.g., a display module (160) in FIG. 1). In an embodiment, the electronic device may output the UI based on information included in the advertising signal. For example, the UI may include an image corresponding to the first external electronic device. The electronic device may establish a connection (e.g., a first communication link) with the first external electronic device based on the information included in the received advertising signal.

If the first external electronic device is an ear wearable device, the ear wearable device may include a first ear bud (e.g., a left ear bud) and a second ear bud (e.g., a right ear bud). The first ear bud and the second ear bud may have address information of each other, and the first ear bud and the second ear bud may be stored in an ear buds case device. If the ear buds case device is opened while the first ear bud and the second ear bud are stored in the ear buds case device, the first ear bud and the second ear bud may perform a page scan operation, and a connection (e.g., a second communication link) may be established between the first ear bud and the second ear bud based on the page scan operation. According to an embodiment, each of the first ear bud and the second ear bud may also establish a connection with the electronic device.

The first external electronic device which establishes the connection with the electronic device may, in operation 713, obtain information associated with a BIS from the electronic device via an extended advertising (EA) operation and/or a periodic advertising (PA) operation, and perform a BIS synchronization operation based on an operation associated with the obtained BIS. This may be described in more detail as follows.

The first external electronic device may receive information associated with a BIS from the electronic device via an add source operation. The specific description of the add source operation is specified in section 3.1.1.4 Add Source operation in Broadcast Audio Scan Service Revision v1.0, so a redundant description will be omitted herein.

For an audio service, the first external electronic device may receive, from the electronic device, periodic advertising data which is broadcast by a broadcast source device so that broadcast sink devices may receive audio data. For example, the first external electronic device may receive an ADV_EXT_IND PDU transmitted by the electronic device at a determined advertising interval. The ADV_EXT_IND PDU may include information about a location of an AUX_ADV_IND PDU and an auxiliary packet point indicating channel information. The AUX_ADV_IND PDU may include at least one of an access address of an AUX_SYNC_IND PDU including BIG information and a channel map, an advertising interval, clock accuracy, or a time offset from a currently transmitted AUX_ADV_IND PDU. The AUX_SYNC_IND PDU may be transmitted before the audio data is transmitted, and if the audio data is transmitted, the AUX_SYNC_IND PDU may include BIG information (BIGInfo) including parameters related to the BIS and transmission information about the audio data.

The electronic device may receive advertising signals transmitted (for example, broadcast) from neighbor devices, and identify that a second external electronic device (e.g., an electronic device 102 or an electronic device 104 in FIG. 1, or a second external electronic device 210 in FIG. 2) is broadcasting a BIS based on the received advertising signals. An advertising signal received by the electronic device from the second external electronic device may include a universally unique identifier (UUID) and/or a broadcast ID of a broadcast audio announcement service (BASS). The electronic device may output a broadcast list including information about receivable broadcast services (e.g., an audio service) via a UI based on the advertising signal received from the second external electronic device.

The electronic device may receive an advertising signal (hereinafter, referred to as a "periodic advertising signal") which the second external electronic device periodically transmits (for example, broadcasts) based on synchronization information (SyncInfo) included in the advertising signal received from the second external electronic device. The periodic advertising signal may include the UUID of the BASS and BIS related information. After receiving the periodic advertising signal, the electronic device may output a broadcast list including information about receivable broadcast services (e.g., an audio service) on a UI. The periodic advertising signal may include BIG information. The electronic device may receive the periodic advertising signal based on the synchronization information, and may receive a BIS based on the BIG information.

When detecting a user input for selecting the second external electronic device, the electronic device may transmit information for receiving the periodic advertising signal broadcast by the second external electronic device to the first external electronic device. The information for receiving the periodic advertising signal broadcast by the second external electronic device may include an advertising address, a broadcast ID, and/or synchronization information broadcast by the second external electronic device. For example, the electronic device may transmit information related to an add source operation to the first external electronic device using the BASS.

The add source operation may be used for providing information about a broadcast source device to a BASS server. The information related to the add source operation may have a format defined as in Table 2-1 and Table 2-2 below. A detailed description of the add source operation is specified in Broadcast Audio Scan Service Revision v1.0 which is a specification provided by Generic Audio Working Group, and this may be described as follows.

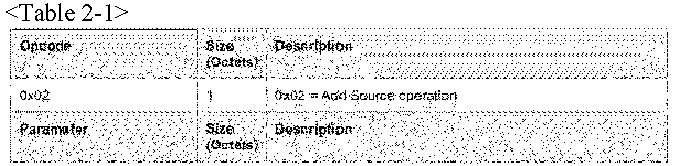

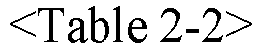

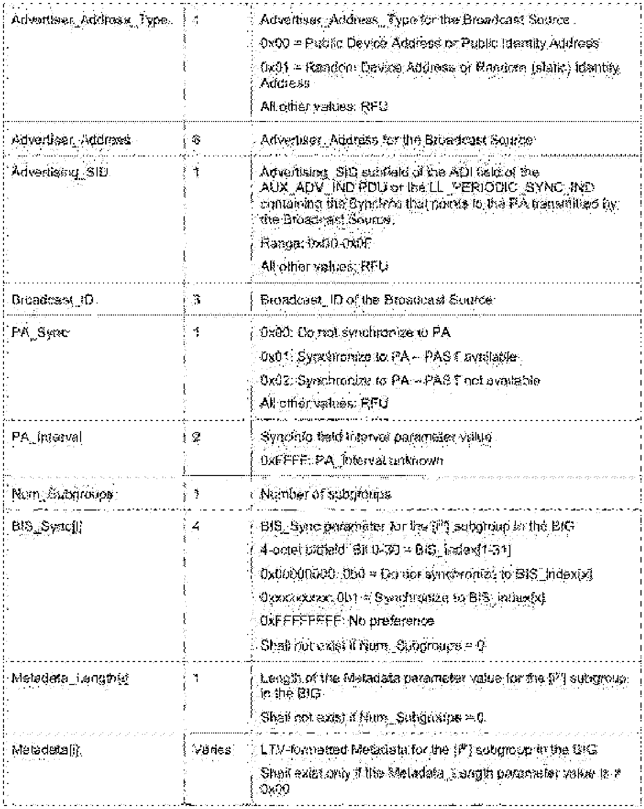

In Table 2-1, the Opcode field may indicate an operation, and if a value of the Opcode is "0x02", it may indicate the add source operation (0x02 = Add Source operation). For example, a size of the Opcode field may be 1 octet.

In Table 2-2, the Advertiser_Address_Type field may indicate an advertiser address type (Advertiser_Address_Type) for the broadcast source device. If a field value of the Advertiser_Address_Type field is 0x00, it may indicate a public device address or a public identity address (0x00 = Public Device Address or Public Identity Address). If the field value of the Advertiser_Address_Type field is 0x01, it may indicate a random device address or a random (static) identity address (0x01 = Random Device Address or Random (static) Identity Address). For example, a size of the Advertiser_Address_Type field may be implemented with 1 octet. The remaining field values of the Advertiser_Address_Type field may be reserved for future use (All other values: RFU).

In Table 2-2, the Advertiser_Address field may indicate an advertiser address of the broadcast source device. For example, a size of the Advertiser_Address field may be 6 octets.

In Table 2-2, the Advertising_SID field may be an Advertising_SID subfield of an ADI field of an AUX_ADV_IND PDU or an LL_PERIODIC_SYNC_IND PDU which includes synchronization information (SyncInfo) pointing to a PA transmitted by the broadcast source device. For example, a size of the Advertising_SID field may be 1 octet.

In Table 2-2, the Broadcast_ID field may indicate a broadcast ID of the broadcast source device. For example, a size of the Broadcast_ID field may be 3 octets.

In Table 2-2, if a field value of the PA_Sync field is "0x00", it may indicate that it does not synchronize to the PA (0x00: Do not synchronize to PA), if the field value of the PA_Sync field is "0x01", it may indicate that it synchronizes to the PA and that a PAST procedure is available (0x01: Synchronize to PA - PAST available), and if the field value of the PA_Sync field is "0x02", it may indicate that it synchronizes to the PA and that the PAST procedure is not available (0x02: Synchronize to PA - PAST not available). For example, a size of the PA_Sync field may be 1 octet. The remaining field values of the PA_Sync field may be reserved for future use (All other values: RFU).

In Table 2-2, the PA_Interval field may indicate a synchronization information field interval parameter value (SyncInfo field Interval parameter value), and if a field value of the PA_Interval field is "0xFFFF", it may indicate PA_Interval unknown (0xFFFF: PA_Interval unknown). For example, a size of the PA_Interval field may be 2 octets.

In Table 2-2, the Num_Subgroups field may indicate the number of subgroups. For example, a size of the Num_Subgroups field may be 1 octet.

In Table 2-2, the BIS_Sync[i] field may indicate a BIS synchronization parameter (BIS_Sync_paraneter) for the i-th subgroup. Bits 0-30 of the BIS_Sync[i] field may indicate BIS index 1 to BIS index 31 (Bits 0-30 = BIS_index[1-31]), if a field value of the BIS_Sync[i] field is 0x00000000: 0b0, it may indicate not to synchronize to BIS index x (0x00000000: 0b0 = Do not synchronize to BIS_index[x]), if the field value of the BIS_Sync[i] field is 0xxxxxxxxx: 0b1, it may indicate to synchronize to BIS index x (0xxxxxxxxx: 0b1 = Synchronize to BIS_index[x]), and if the field value of the BIS_Sync[i] field is 0xFFFFFFFF, it may indicate that a reference does not exist (0xFFFFFFFF: No preference). If the value of the Num_Subgroups field is set to 0, the BIS_Sync[i] field will not exist (Shall not exist if Num_Subgroups = 0). For example, a size of the BIS_Sync[i] field may be 4 octets.

In Table 2-2, the Metadata_Length[i] field may indicate a length of a metadata parameter for the i-th subgroup included in a BIG. If a value of the Num_Subgroups field is set to 0, the Metadata_Length[i] field will not exist (Shall not exist if Num_Subgroups = 0). For example, a size of the Metadata_Length[i] field may be 1 octet.

In Table 2-2, the Metadata[i] field may indicate LTV-formatted metadata for the ith subgroup included in the BIG (LTV-formatted Metadata for the [i th] subgroup). The Metadata[i] field may exist only if a value of the Metadata_Length[i] field is not 0x00 (Shall exist only if the Metadata_Length parameter value is ≠ 0x00).

The first external electronic device which performs the BIS synchronization operation may detect a user input for a playback control operation in operation 715. For example, the first external electronic device may detect the user input for the playback control operation via a touchpad, a button, or a sensor. For example, if the first external electronic device includes a first earbud and a second earbud, the user input for the playback control operation from at least one of the first earbud or the second earbud may be detected. According to an embodiment, the playback control operation may be related to playing a BIS and may be a playback control operation of the broadcast sink device. The playback control operation may include an operation such as a play operation, a pause operation, a previous track operation, and/or a next track operation.

The first external electronic device which detects the user input for the playback control action may identify, in operation 717, whether a broadcast action is being performed. If the broadcast operation is not being performed (Operation 717-No), the first external electronic device may terminate without performing any further operations.

If the broadcast operation is being performed (Operation 717-Yes), the first external electronic device may perform the playback control operation based on the user input for the playback control operation in operation 719. According to an embodiment, the first external electronic device may be performing a BIS synchronization operation for a BIS broadcast from the second external electronic device based on information received from the electronic device. In this case, the first external electronic device may perform the playback control operation based on the user input and transmit a result of the playback control operation to the electronic device via the at least one communication circuit. This may be specifically described as follows.

First, the second external electronic device may be a broadcast source device. For example, it will be assumed that the second external electronic device is a TV, and a BIG managed by the second external electronic device includes four subgroups, and each subgroup includes two BISs. Programs broadcast in the four subgroups may be different.

The electronic device may be a broadcast assistant device. For example, it will be assumed that the electronic device is a smart phone. The electronic device may retrieve information about programs which the broadcast source device is broadcasting in a particular application, for example, a media playback application, and upon detecting a user input for selecting a particular program based on a retrieving result, transmit a start listening command for commanding the first external electronic device operating as the broadcast sink device to start listening to the selected program.

The first external electronic device may be the broadcast sink device. For example, it will be assumed that the first external electronic device is a wearable device. The first external electronic device may receive, from the electronic device operating as the broadcast assistant device, a start listening command for commanding to start listening to a program selected by a user, and may listen to the selected program based on the received start listening command. If the first external electronic device detects a user input for a playback control operation while listening to the selected program, the first external electronic device may perform a playback control operation for the program based on the user input. If playback information for the program is changed according to the playback control operation, the first external electronic device may notify the electronic device of the changed playback information.

A description of a playback control operation in which a first external electronic device controls a BIS synchronization operation based on a user input may be as follows.

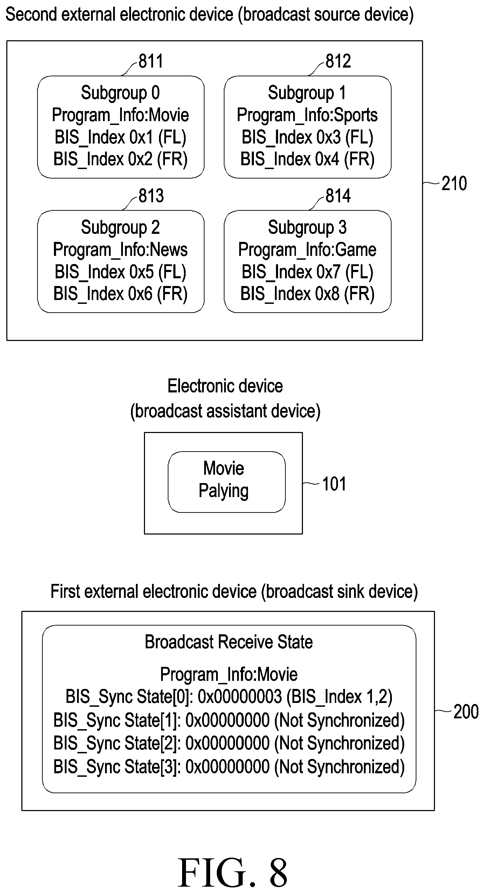

FIG. 8 is a drawing for describing a BIS synchronization operation according to an embodiment.

Referring to FIG. 8, a second external electronic device 210 (e.g., an electronic device 102 or an electronic device 104 in FIG. 1, or a second external electronic device 210 in FIG. 2) may be a broadcast source device. For example, the second external electronic device 210 may be a TV.

The second external electronic device 210 may manage at least one BIG, and each of the at least one BIG may include four subgroups. For example, the four subgroups may be subgroup 0 811, subgroup 1 812, subgroup 2 813, and subgroup 3 814. Programs broadcast in the four subgroups may be different. Each of the four subgroups may include two BISs.

For example, subgroup 0 811 may be broadcasting a Movie program (Program_Info: Movie) and may include a BIS corresponding to BIS index 0x1 which is a front left (FL) audio channel (BIS_Index: 0x1(FL)) and a BIS corresponding to BIS index 0x2 which is a front right (FR) audio channel (BIS_Index: 0x2(FR)).

For example, subgroup 1 812 may be broadcasting a Sports program (Program_Info: Sports) and may include a BIS corresponding to BIS index 0x3 which is an FL audio channel (BIS_Index: 0x3(FL)) and a BIS corresponding to BIS index 0x4 which is an FR audio channel (BIS_Index: 0x4(FR)).

For example, subgroup 2 813 may be broadcasting a News program (Program_Info: News) and may include a BIS corresponding to BIS index 0x5 which is an FL audio channel (BIS_Index: 0x5(FL)) and a BIS corresponding to BIS index 0x6 which is an FR audio channel (BIS_Index: 0x6(FR)).

For example, subgroup 3 814 may be broadcasting a Game program (Program_Info: Game) and may include a BIS corresponding to BIS index 0x7 which is an FL audio channel (BIS_Index: 0x7(FL)) and a BIS corresponding to BIS index 0x8 which is an FR audio channel (BIS_Index: 0x8(FR)).

In an embodiment, an electronic device 101 (e.g., an electronic device 101 in FIG. 1 or 2) may be a broadcast assistant device. For example, the electronic device 101 can be a smart phone. The electronic device 101 may establish, with the first external electronic device 200, a connection (e.g., a communication link) based on at least one of a Wi-Fi scheme and/or a Bluetooth scheme. The electronic device 101 may retrieve information about programs which the second external electronic device 210, which is a broadcast source device, is broadcasting in a specific application, e.g., a media playback application, and when detecting a user input for selecting a specific program based on a retrieving result, the electronic device 101 may transmit a start listening command for commanding a first external electronic device 200 (e.g., the electronic device 102 or the electronic device 104 in FIG. 1, or a first external electronic device 200 in FIG. 2 or 4) operating as the broadcast sink device to start listening to the selected program. In FIG. 8, it will be assumed that the selected program is a movie program provided via subgroup 0 811.

The first external electronic device 200 may be a broadcast sink device. The first external electronic device 200 may be an ear wearable device. The first external electronic device 200 receives, from the electronic device 101 operating as the broadcast assistant device, the start listening command for commanding to start listening to a program (e.g., the movie program) selected by the user, and may listen to the selected program based on the received start listening command. In this case, a broadcast receive state characteristic of the first external electronic device 200 may be expressed as shown in Table 3 below.

**<Table 3>**

| |
|---|
| Program Info: Movie |
| BIS_Sync State[0]: 0x00000003 (BIS_Index 1, 2) |
| BIS_Sync State[1] 0x00000000 (Not synchronized) |
| BIS_Sync State[2]: 0x00000000 (Not synchronized) |
| BIS_Sync State[3]: 0x00000000 (Not synchronized) |

In Table 3, program information (Program Info) may be included in the Metadata[i] field, and BIS_Sync State[0], BIS_Sync State[1], BIS_Sync State[2], and BIS_Sync State[3] may be included in the BIS_Sync State[i] field.

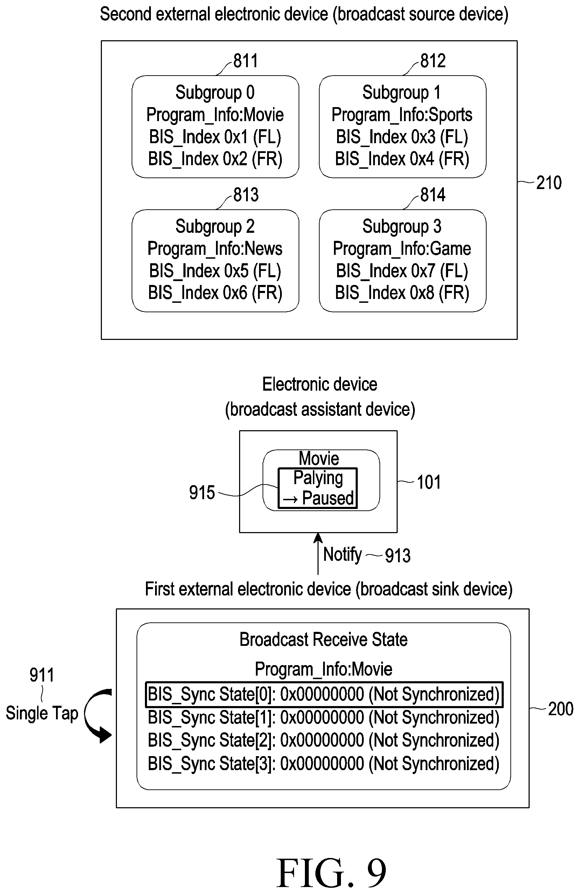

FIG. 9 is a drawing for describing an operation of performing a playback control operation while a BIS synchronization operation is performed according to an embodiment.

Referring to FIG. 9, a playback control operation may include an operation such as a play operation, a pause operation, a previous track operation, and/or a next track operation. In FIG. 9, as described in FIG. 8, a case will be described where a first external electronic device 200 (e.g., an electronic device 102 or an electronic device 104 in FIG. 1, or a first external electronic device 200 in FIG. 2, FIG. 4, or FIG. 8) which is a broadcast sink device performs a pause operation while listening to an audio service (e.g., a movie program) corresponding to subgroup 0 among BISs transmitted by a second external electronic device 210 (e.g., the electronic device 102 or the electronic device 104 in FIG. 1, or a second external electronic device 210 in FIG. 2 or FIG. 8) which is a broadcast source device.

In a case of a broadcast service, unlike a unicast service, it may be impossible to perform a pause operation on a currently playing service (e.g., an audio service). Therefore, the first external electronic device 200 may perform a synchronization operation or an asynchronization operation for a BIS index to select whether to play the audio service. For example, a user input for the pause operation may be a single tap while an audio service is being played on the first external electronic device 200. In FIG. 9, a case where the user input for the pause operation is the single tap while the audio service is being played on the first external electronic device 200 will be described as an example, but it will be noted that it may not be limited thereto. In an embodiment, the first external electronic device 200 may include a first earbud (e.g., a left earbud) and/or a second earbud (e.g., a right earbud). If the first external electronic device 200 includes the first earbud and the second earbud, the user input may be implemented differently, and this may vary depending on implementation of a manufacturer of the first external electronic device 200. For example, the user input for the pause operation may be a single tap for the first earbud while the audio service is being played, or may be a single tap for the second earbud while the audio service is being played. In this way, if the first external electronic device 200 includes the first earbud and the second earbud, an operation based on the first earbud and an operation based on the second earbud may vary, and this may vary depending on implementation of the manufacturer of the first external electronic device.

When identifying the user input (e.g., the single tap) corresponding to the pause operation in operation 911 while playing an audio service in synchronization with respect to BIS index 1 and BISs corresponding to BIS index 1, the first external electronic device 200 may perform an asynchronization operation on the synchronized BISs. The first external electronic device 200 which performs the asynchronization operation may notify an electronic device 101 (e.g., an electronic device 101 in FIG. 1, FIG. 2, or FIG. 8) which is a broadcast assistant device of a broadcast receive state characteristic of the first external electronic device 200 in operation 913. According to an embodiment, if the broadcast receive state characteristic is changed, the broadcast sink device may need to notify the broadcast assistant device of the changed broadcast receive state characteristic.

For example, the changed broadcast receive state characteristic of the first external electronic device 200 may be expressed as in Table 4 below.

**<Table 4>**

| |
|---|
| Program Info: Movie |
| BIS_Sync State[0]: 0x00000000 (Not synchronized) |
| BIS_Sync State[1]: 0x00000000 (Not synchronized) |
| BIS_Sync State[2]: 0x00000000 (Not synchronized) |
| BIS_Sync State[3]: 0x00000000 (Not synchronized) |

In Table 4, program information may be included in the Metadata[i] field, and BIS_Sync State[0], BIS_Sync State[1], BIS_Sync State[2], and BIS_Sync State[3] may be included in the BIS_Sync State[i] field.

The electronic device 101 which receives the broadcast receive state characteristic from the first external electronic device 200 may, in operation 915, identify that all values of the BIS_Sync State[i] field included in the received broadcast receive state characteristic are 0x00000000 (e.g., there is no synchronized BIS), and may change a state of the audio service being played in the first external electronic device 200 from a playing state to a pause state via a UI. The electronic device 101 may output a message indicating that the state of the audio service being played in the first external electronic device 200 is changed from the playing state to the pause state via the UI.

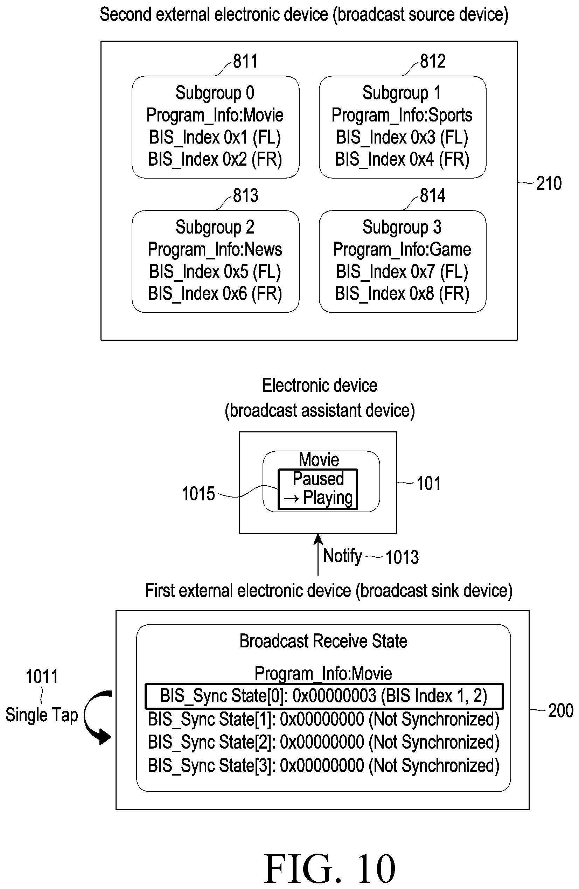

FIG. 10 is a drawing for describing an operation of performing a playback control operation while a BIS synchronization operation is performed according to an embodiment.

Referring to FIG. 10, a playback control operation may include an operation such as a play operation, a pause operation, a previous track operation, and/or a next track operation. In FIG. 10, as described in FIG. 9, a case will be described where a first external electronic device 200 (e.g., an electronic device 102 or an electronic device 104 in FIG. 1, or a first external electronic device 200 in FIG. 2, FIG. 4, FIG. 8, or FIG. 9) which is a broadcast sink device performs a play operation while an audio service (e.g., a movie program) is paused, where the audio service corresponds to subgroup 0 among BISs transmitted by a second external electronic device 210 (e.g., the electronic device 102 or the electronic device 104 in FIG. 1, or a second external electronic device 210 in FIG. 2, FIG. 8, or FIG. 9) which is a broadcast source device.

As described in FIG. 9, in a case of a broadcast service, unlike a unicast service, it may be impossible to perform a pause operation on a currently playing service (e.g., an audio service). Therefore, the first external electronic device 200 may perform a synchronous operation or an asynchronous operation for a BIS index to select whether to play the audio service. In an embodiment, a user input for the play operation may be a single tap while an audio service is paused on the first external electronic device 200. In FIG. 10, a case where the user input for the play operation is the single tap while the audio service is paused on the first external electronic device 200 will be described as an example, but it will be noted that it may not be limited thereto. In an embodiment, the first external electronic device 200 may include a first earbud (e.g., a left earbud) and/or a second earbud (e.g., a right earbud). If the first external electronic device 200 includes the first earbud and the second earbud, the user input may be implemented differently, and this may vary depending on implementation of a manufacturer of the first external electronic device 200. For example, the user input for the pause operation may be a single tap for the first earbud while the audio service is paused, or may be a single tap for the second earbud while the audio service is paused. In this way, if the first external electronic device 200 includes the first earbud and the second earbud, an operation based on the first earbud and an operation based on the second earbud may vary, and this may vary depending on implementation of the manufacturer of the first external electronic device 200.

While an audio service provided via BIS index 1 and BISs corresponding to BIS index 1 is paused, the first external electronic device 200 may perform a synchronization operation on the paused BISs when identifying a user input (e.g., a single tap) corresponding to a playback operation in operation 1011. The first external electronic device 200 which performs the synchronization operation may notify an electronic device 101 (e.g., an electronic device 101 in FIG. 1, FIG. 2, or FIG. 8) which is a broadcast assistant device of a broadcast receive state characteristic of the first external electronic device 200 in operation 1013. According to an embodiment, if the broadcast receive state characteristic is changed, the broadcast sink device may need to notify the broadcast assistant device of the changed broadcast receive state characteristic.

For example, the changed broadcast receive state characteristic of the first external electronic device 200 may be expressed as in Table 5 below.

**<Table 5>**

| |
|---|
| Program Info: Movie |
| BIS_Sync State[0]: 0x00000003 (BIS_Index 1, 2) |
| BIS_Sync State[1]: 0x00000000 (Not synchronized) |
| BIS_Sync State[2]: 0x00000000 (Not synchronized) |
| BIS_Sync State[3]: 0x00000000 (Not synchronized) |

In Table 5, program information may be included in the Metadata[i] field, and BIS_Sync State[0], BIS_Sync State[1], BIS_Sync State[2], and BIS_Sync State[3] may be included in the BIS_Sync State[i] field.

The electronic device 101 which receives the broadcast receive state characteristic from the first external electronic device 200 may, in operation 1015, identify that a value of BIS_Sync State[0] among values of the BIS_Sync State[i] field included in the received broadcast receive state characteristic is 0x00000003 (for example, synchronized to BISs included in subgroup 0), and may change a state of the audio service being played in the electronic device 101 from the pause state to a play state. The electronic device 101 may output a message indicating that the state of the audio service is changed from the pause state to the play state via a UI.

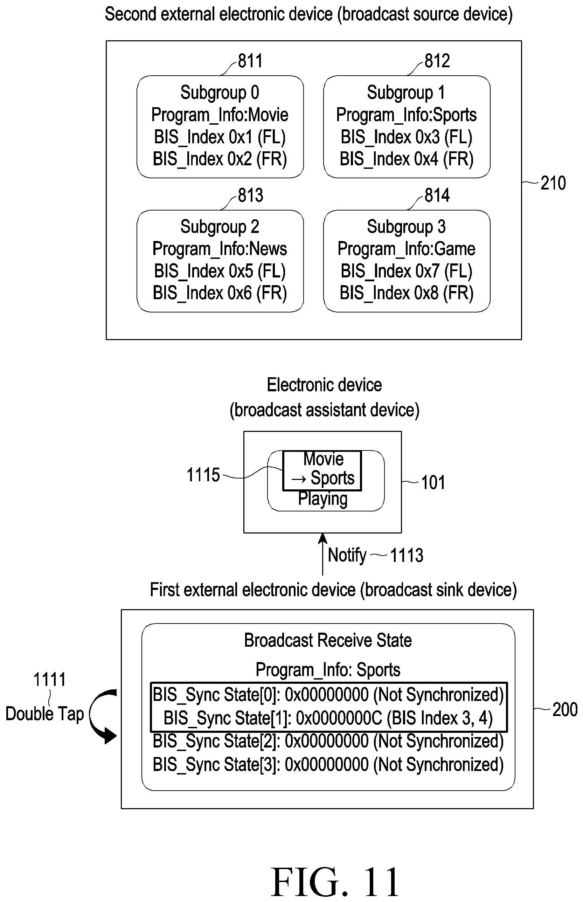

FIG. 11 is a drawing for describing an operation of performing a playback control operation while a BIS synchronization operation is performed according to an embodiment.

Referring to FIG. 11, a playback control operation may include an operation such as a play operation, a pause operation, a previous track operation, and/or a next track operation. In FIG. 11, as described in FIG. 8, a case will be described where a first external electronic device 200 (e.g., an electronic device 102 or an electronic device 104 in FIG. 1, or a first external electronic device 200 in FIG. 2, FIG. 4, FIG. 8, FIG. 9, or FIG. 10) which is a broadcast sink device performs a next track operation while listening to an audio service (e.g., a movie program), where the audio service corresponds to subgroup 0 among BISs transmitted by a second external electronic device 210 (e.g., the electronic device 102 or the electronic device 104 in FIG. 1, or a second external electronic device 210 in FIG. 2, FIG. 8, FIG. 9, or FIG. 10) which is a broadcast source device.

The second external electronic device 210 may provide an audio service via a plurality of subgroups simultaneously, and in FIG. 11, it will be assumed that the second external electronic device 210 outputs two programs (e.g., a movie program and a sports program) to split screens in a multi-view scheme, and outputs audio of the two programs via two subgroups (e.g., subgroup 0 and subgroup 1). For example, the user input for the next track operation may be a double tap while the audio service is being played on the first external electronic device 200. In FIG. 11, a case where the user input for the next track operation is the double tap while the audio service is being played on the first external electronic device 200 will be described as an example, but it will be noted that it may not be limited thereto. In an embodiment, the first external electronic device 200 may include a first earbud (e.g., a left earbud) and/or a second earbud (e.g., a right earbud). If the first external electronic device 200 includes the first earbud and the second earbud, the user input may be implemented differently, and this may depend on implementation of a manufacturer of the first external electronic device 200. For example, the user input for the next track operation may be a double tap for the first earbud while the audio service is being played, or a double tap for the second earbud while the audio service is being played. In this way, if the first external electronic device 200 includes the first earbud and the second earbud, an operation based on the first earbud and an operation based on the second earbud may be different, and this may depend on the implementation of the manufacturer of the first external electronic device 200.

When identifying the user input (e.g., the double tap) corresponding to the next track operation in operation 1111 while playing an audio service in synchronization with respect to BIS index 1 and BISs corresponding to BIS index 1, the first external electronic device 200 may perform an asynchronization operation on the synchronized BISs, and synchronize to BISs (e.g., BISs corresponding to BIS index 3 and BIS index 4) included in a subgroup (e.g., subgroup 1) following a subgroup (e.g., subgroup 0) to which the currently synchronized BISs belong. The first external electronic device 200 which performs the synchronization operation on the BISs included in the subgroup following the subgroup to which the currently synchronized BISs belong may notify an electronic device 101 (e.g., an electronic device 101 in FIG. 1, FIG. 2, FIG. 8, FIG. 9, or FIG. 10) which is a broadcast assistant device of a broadcast receive state characteristic of the first external electronic device 200 in operation 1113. According to an embodiment, if the broadcast receive state characteristic is changed, the broadcast sink device may need to notify the broadcast assistant device of the changed broadcast receive state characteristic. According to an embodiment, the first external electronic device 200 may also perform a synchronization operation on other BISs included in the currently synchronized BIG group, or BISs included in a BIG group provided from another broadcast source device, and in this case, the first external electronic device 200 may notify the electronic device of the broadcast receive state characteristic of the first external electronic device 200.

For example, the changed broadcast receive state characteristic of the first external electronic device 200 may be expressed as in Table 6 below.

**<Table 6>**

| |
|---|
| Program Info: Sports |
| BIS_Sync State[0]: 0x00000000 (Not synchronized) |
| BIS_Sync State[1]: 0x0000000C (BIS_Index 3, 4) |
| BIS_Sync State[2]: 0x00000000 (Not synchronized) |
| BIS_Sync State[3]: 0x00000000 (Not synchronized) |

In Table 6, program information may be included in the Metadata[i] field, and BIS_Sync State[0], BIS_Sync State[1], BIS_Sync State[2], and BIS_Sync State[3] may be included in the BIS_Sync State[i] field.

The electronic device 101 which receives the broadcast receive state characteristic from the first external electronic device 200 may, in operation 1115, identify that among values of the BIS_Sync State[i] field included in the received broadcast receive state characteristic, a value of BIS_Sync State[0] is 0x00000000 (e.g., not synchronized with BISs included in subgroup 0) and a value of BIS_Sync State[1] is 0x0000000C (e.g., synchronized with BISs included in subgroup 1), and may change program information being played on the electronic device 101 from the movie program to the sports program. The electronic device 101 may output a message indicating that the program information being played is changed from the movie program to the sports program via a UI.

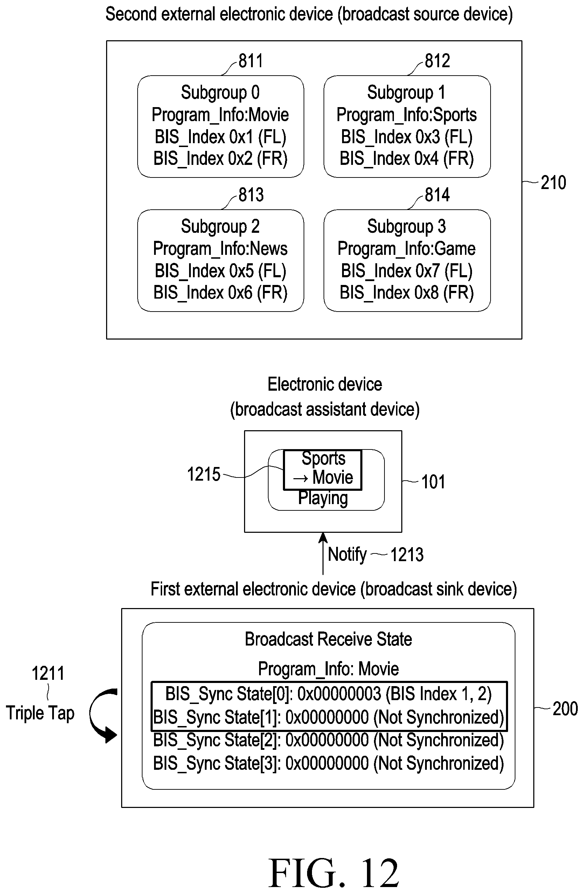

FIG. 12 is a drawing for describing an operation of performing a playback control operation while a BIS synchronization operation is performed according to an embodiment.

Referring to FIG. 12, a playback control operation may include an operation such as a play operation, a pause operation, a previous track operation, and/or a next track operation. In FIG. 12, as described in FIG. 11, a case will be described where a first external electronic device 200 (e.g., an electronic device 102 or an electronic device 104 in FIG. 1, or a first external electronic device 200 in FIG. 2, FIG. 4, FIG. 8, FIG. 9, FIG. 10, or FIG. 11) which is a broadcast sink device performs a previous track operation while listening to an audio service (e.g., a sports program), where the audio service corresponds to subgroup 1 among BISs transmitted by a second external electronic device 210 (e.g., the electronic device 102 or the electronic device 104 in FIG. 1, or a second external electronic device 210 in FIG. 2, FIG. 8, FIG. 9, FIG. 10, or FIG. 11) which is a broadcast source device.

The second external electronic device 210 may provide an audio service via a plurality of subgroups simultaneously, and in FIG. 12, as described in FIG. 11, it will be assumed that the second external electronic device 210 outputs two programs (e.g., a movie program and a sports program) to split screens in a multi-view scheme, and outputs audio of the two programs via two subgroups (e.g., subgroup 0 and subgroup 1). For example, the user input for the previous track operation may be a triple tap while the audio service is being played on the first external electronic device 200. In FIG. 12, a case where the user input for the previous track operation is the triple tap while the audio service is being played on the first external electronic device 200 will be described as an example, but it will be noted that it may not be limited thereto. In an embodiment, the first external electronic device 200 may include a first earbud (e.g., a left earbud) and/or a second earbud (e.g., a right earbud). If the first external electronic device 200 includes the first earbud and the second earbud, the user input may be implemented differently, and this may depend on implementation of a manufacturer of the first external electronic device 200. For example, the user input for the previous track operation may be a triple tap for the first earbud while the audio service is being played, or a triple tap for the second earbud while the audio service is being played. In this way, if the first external electronic device 200 includes the first earbud and the second earbud, an operation based on the first earbud and an operation based on the second earbud may be different, and this may depend on the implementation of the manufacturer of the first external electronic device 200.

When identifying the user input (e.g., the triple tap) corresponding to the previous track operation in operation 1211 while playing an audio service in synchronization with respect to BIS index 3 and BISs corresponding to BIS index 4, the first external electronic device 200 may perform an asynchronization operation on the synchronized BISs, and synchronize to BISs (e.g., BISs corresponding to BIS index 1 and BIS index 2) included in a subgroup (e.g., subgroup 0) before a subgroup (e.g., subgroup 1) to which the currently synchronized BISs belong. The first external electronic device 200 which performs the synchronization operation on the BISs included in the subgroup before the subgroup to which the currently synchronized BISs belong may notify an electronic device 101 (e.g., an electronic device 101 in FIG. 1, FIG. 2, FIG. 8, FIG. 9, FIG. 10, or FIG. 11) which is a broadcast assistant device of a broadcast receive state characteristic of the first external electronic device 200 in operation 1213. According to an embodiment, if the broadcast receive state characteristic is changed, the broadcast sink device may need to notify the broadcast assistant device of the changed broadcast receive state characteristic.

For example, the changed broadcast receive state characteristic of the first external electronic device 200 may be expressed as in Table 7 below.

**<Table 7>**

| |
|---|
| Program Info: Sports |
| BIS_Sync State[0]: 0x00000003 (BIS_ Index 1, 2) |
| BIS_Sync State[1]: 0x00000000 (Not synchronized) |
| BIS_Sync State[2]: 0x00000000 (Not synchronized) |
| BIS_Sync State[3]: 0x00000000 (Not synchronized) |

In Table 7, program information may be included in the Metadata[i] field, and BIS_Sync State[0], BIS_Sync State[1], BIS_Sync State[2], and BIS_Sync State[3] may be included in the BIS_Sync State[i] field.

The electronic device 101 which receives the broadcast receive state characteristic from the first external electronic device 200 may, in operation 1215, identify that among values of the BIS_Sync State[i] field included in the received broadcast receive state characteristic, a value of BIS_Sync State[0] is 0x00000003 (e.g., synchronized with BISs included in subgroup 0) and a value of BIS_Sync State[1] is 0x00000000 (e.g., not synchronized with BISs included in subgroup 1), and may change program information being played on the electronic device 101 from the sports program to the movie program. The electronic device 101 may output a message indicating that the program information being played is changed from the sports program to the movie program via a UI.

Referring back to FIG. 7, the first external electronic device which performs the playback control operation based on the user input for the playback control operation may transmit information related to a result of the playback control operation to the electronic device via the at least one communication circuit in operation 721. As the first external electronic device transmits the information related to the result of the playback control operation to the electronic device, the electronic device may output a message indicating a state of a broadcast service which is currently being serviced via the UI. An operation in which the first external electronic device transmits the information related to the result of the playback control operation to the electronic device and the electronic device outputs the message indicating the state of the broadcast service which is currently being serviced via the UI may be implemented to be similar to or substantially the same as those described with reference to FIGS. 9 to 12, so a detailed description thereof will be omitted herein.

According to an embodiment of the disclosure, a method of an electronic device (102; 104; 200) may comprise establishing a connection with a first external electronic device (101).

According to an embodiment of the disclosure, the method may comprise, after establishing the connection, detecting a user input.

According to an embodiment of the disclosure, the method may comprise, based on the user input, identifying whether a broadcast operation is being performed.

According to an embodiment of the disclosure, the method may comprise, based on identifying that the broadcast operation is being performed, performing an operation corresponding to the user input for at least one broadcast isochronous stream (BIS) transmitted from a second external electronic device (210).

According to an embodiment of the disclosure, the method may comprise, transmitting information related to a result of the operation corresponding to the user input to the first external electronic device.

According to an embodiment of the disclosure, if the user input is a user input for pausing a broadcast service corresponding to the at least one BIS which is being played, the operation based on the user input may comprise an operation of performing an asynchronization operation for the at least one BIS.

According to an embodiment of the disclosure, if the user input is the user input for pausing the broadcast service corresponding to the at least one BIS which is being played, the information related to the result of the operation based on the user input may include at least one of information indicating that the electronic device is not synchronized to the at least one BIS, or information related to a subgroup in which the at least one BIS is included.

According to an embodiment of the disclosure, the subgroup may be included in a broadcast isochronous group (BIG).

According to an embodiment of the disclosure, if the user input is a user input for playing the broadcast service corresponding to the at least one BIS which is being paused, the operation based on the user input may comprise an operation of performing a synchronization operation for the at least one BIS.

According to an embodiment of the disclosure, if the user input is the user input for playing the broadcast service corresponding to the at least one BIS which is being paused, the information related to the result of the operation based on the user input may include at least one of information indicating that the electronic device is synchronized to the at least one BIS, or information related to a subgroup in which the at least one BIS is included.

According to an embodiment of the disclosure, the subgroup may be included in a broadcast isochronous group (BIG).

According to an embodiment of the disclosure, if the at least one BIS includes a first BIS included in a first subgroup included in a broadcast isochronous group (BIG) and a second BIS included in a second subgroup included in the BIG, and the user input is a user input for changing a first broadcast service corresponding to the first BIS which is being played to a second broadcast service corresponding to the second BIS, the operation based on the user input may comprise an operation of performing an asynchronization operation for the first BIS and performing a synchronization operation for the second BIS.

According to an embodiment of the disclosure, if the user input is the user input for changing the first broadcast service corresponding to the first BIS which is being played to the second broadcast service corresponding to the second BIS, the information related to the result of the operation based on the user input may include information indicating that the electronic device is not synchronized to the first BIS and is synchronized to the second BIS, and information related to a second subgroup in which the second BIS is included.

According to an embodiment of the disclosure, the second subgroup may be included in a broadcast isochronous group (BIG).

According to an embodiment of the disclosure, if the user input is a user input for changing the second broadcast service corresponding to the second BIS which is being played to the first broadcast service corresponding to the first BIS, the operation based on the user input may include an operation of performing an asynchronization operation for the second BIS and performing a synchronization operation for the first BIS.

According to an embodiment of the disclosure, if the user input is the user input for changing the second broadcast service corresponding to the second BIS which is being played to the first broadcast service corresponding to the first BIS, the information related to the result of the operation based on the user input may include information indicating that the electronic device is not synchronized to the second BIS and is synchronized to the first BIS, and information related to a first subgroup in which the first BIS is included.

According to an embodiment of the disclosure, the first subgroup may be included in the BIG.

According to an embodiment of the disclosure, a storage medium storing at least one computer-readable instruction may be provided.

According to an embodiment of the disclosure, the at least one instruction, when executed by one or more processors (404) including processing circuitry of an electronic device (102; 104; 200), may cause the electronic device to perform at least one operation.

According to an embodiment of the disclosure, the at least one operation may comprise establishing a connection with a first external electronic device (101).

According to an embodiment of the disclosure, the at least one operation may comprise, after establishing the connection, detecting a user input.

According to an embodiment of the disclosure, the at least one operation may comprise, based on the user input, identifying whether a broadcast operation is being performed.

According to an embodiment of the disclosure, the at least one operation may comprise, based on identifying that the broadcast operation is being performed, performing an operation corresponding to the user input for at least one broadcast isochronous stream (BIS) transmitted from a second external electronic device (210).

According to an embodiment of the disclosure, the at least one operation may comprise transmitting information related to a result of the operation corresponding to the user input to the first external electronic device.

## Claims

1. An electronic device (102; 104; 200), comprising:
at least one sensor (410);
at least one communication circuit (402);
one or more processors (404) including processing circuitry; and
memory (406) storing instructions that, when executed by the one or more processors individually or collectively, cause the electronic device to:
establish a connection with a first external electronic device (101) via the at least one communication circuit,
after establishing the connection, detect a user input via the at least one sensor,
based on the user input, identify whether a broadcast operation is being performed,
based on identifying that the broadcast operation is being performed, perform an operation corresponding to the user input for at least one broadcast isochronous stream, BIS, transmitted from a second external electronic device (210), and
transmit information related to a result of the operation corresponding to the user input to the first external electronic device via the at least one communication circuit.

2. The electronic device of claim 1, wherein the instructions, when executed by the one or more processors individually or collectively, cause the electronic device to:
based on the user input being a user input for pausing a broadcast service corresponding to the at least one BIS which is being played, perform an asynchronization operation for the at least one BIS.

3. The electronic device of claim 2, wherein the instructions, when executed by the one or more processors individually or collectively, cause the electronic device to:
based on the user input being the user input for pausing the broadcast service corresponding to the at least one BIS which is being played, transmit, to the first external electronic device via the at least one communication processor, at least one of information indicating that the electronic device is not synchronized to the at least one BIS, or information related to a subgroup in which the at least one BIS is included, and
wherein the subgroup is included in a broadcast isochronous group, BIG.

4. The electronic device of claim 2 or 3, wherein the instructions, when executed by the one or more processors individually or collectively, cause the electronic device to:
based on the user input being a user input for playing the broadcast service corresponding to the at least one BIS which is being paused, perform a synchronization operation for the at least one BIS.

5. The electronic device of claim 4, wherein the instructions, when executed by the one or more processors individually or collectively, cause the electronic device to:
based on the user input being the user input for playing the broadcast service corresponding to the at least one BIS which is being paused, transmit, to the first external electronic device via the at least one communication processor, at least one of information indicating that the electronic device is synchronized to the at least one BIS, or information related to a subgroup in which the at least one BIS is included, and
wherein the subgroup is included in a broadcast isochronous group, BIG.

6. The electronic device of claim 1, wherein the instructions, when executed by the one or more processors individually or collectively, cause the electronic device to:
based on the at least one BIS including a first BIS included in a first subgroup included in a broadcast isochronous group, BIG, and a second BIS included in a second subgroup included in the BIG, and the user input being a user input for changing a first broadcast service corresponding to the first BIS which is being played to a second broadcast service corresponding to the second BIS, perform an asynchronization operation for the first BIS and perform a synchronization operation for the second BIS.

7. The electronic device of claim 6, wherein the instructions, when executed by the one or more processors individually or collectively, cause the electronic device to:
based on the user input being the user input for changing the first broadcast service corresponding to the first BIS which is being played to the second broadcast service corresponding to the second BIS, transmit, to the first external electronic device via the at least one communication processor, information indicating that the electronic device is not synchronized to the first BIS and is synchronized to the second BIS, and information related to a second subgroup in which the second BIS is included, and
wherein the second subgroup is included in a broadcast isochronous group, BIG.

8. The electronic device of claim 6 or 7, wherein the instructions, when executed by the one or more processors individually or collectively, cause the electronic device to:
based on the user input being a user input for changing the second broadcast service corresponding to the second BIS which is being played to the first broadcast service corresponding to the first BIS, perform an asynchronization operation for the second BIS and perform a synchronization operation for the first BIS.

9. The electronic device of claim 8, wherein the instructions, when executed by the one or more processors individually or collectively, cause the electronic device to:
based on the user input being the user input for changing the second broadcast service corresponding to the second BIS which is being played to the first broadcast service corresponding to the first BIS, transmit, to the first external electronic device via the at least one communication processor, information indicating that the electronic device is not synchronized to the second BIS and is synchronized to the first BIS, and information related to a first subgroup in which the first BIS is included, and
wherein the first subgroup is included in the BIG.

10. The electronic device of any one of claims 1 to 9, wherein the broadcast operation is a broadcast operation from a time point at which the electronic device receives an add source operation code indicating an add source operation from the first external electronic device operating as a broadcast assistant device to a time point at which the electronic device receives a remove source operation code indicating a remove source operation from the second external electronic device operating as a broadcast source device.

11. A storage medium storing at least one computer-readable instruction, the at least one instruction, when executed by one or more processors (404) including processing circuitry of an electronic device (102; 104; 200) individually or collectively, causing the electronic device to perform at least one operation, the at least one operation comprising:
establishing a connection with a first external electronic device (101),
after establishing the connection, detecting a user input,
based on the user input, identifying whether a broadcast operation is being performed,
based on identifying that the broadcast operation is being performed, performing an operation corresponding to the user input for at least one broadcast isochronous stream, BIS, transmitted from a second external electronic device (210), and
transmitting information related to a result of the operation corresponding to the user input to the first external electronic device.

12. A method of an electronic device (102; 104; 200), the method comprising:
establishing a connection with a first external electronic device (101);
after establishing the connection, detecting a user input;
based on the user input, identifying whether a broadcast operation is being performed;
based on identifying that the broadcast operation is being performed, performing an operation corresponding to the user input for at least one broadcast isochronous stream, BIS, transmitted from a second external electronic device (210); and
transmitting information related to a result of the operation corresponding to the user input to the first external electronic device.

13. The method of claim 12, wherein, if the user input is a user input for pausing a broadcast service corresponding to the at least one BIS which is being played, the operation based on the user input comprises an operation of performing an asynchronization operation for the at least one BIS.

14. The method of claim 13, wherein, if the user input is the user input for pausing the broadcast service corresponding to the at least one BIS which is being played, the information related to the result of the operation based on the user input includes at least one of information indicating that the electronic device is not synchronized to the at least one BIS, or information related to a subgroup in which the at least one BIS is included, and
wherein the subgroup is included in a broadcast isochronous group, BIG.

15. The method of claim 13 or 14, wherein, if the user input is a user input for playing the broadcast service corresponding to the at least one BIS which is being paused, the operation based on the user input comprises an operation of performing a synchronization operation for the at least one BIS.
